# EUROPEAN PATENT SPECIFICATION

(11) **EP 4 540 522 B1**
(45) Date of publication and mention of the grant of the patent: **01.04.2026**
(21) Application number: 23732596.4
(22) Date of filing: 15.06.2023
(51) Int. Cl.: F03D 13/10, F03D 13/25, F03D 13/20, E04H 12/34

(54) **METHOD AND BLADE INSTALLATION DEVICE FOR INSTALLING A BLADE OF AN OFFSHORE WIND TURBINE**
VERFAHREN UND SCHAUFELINSTALLATIONSVORRICHTUNG ZUR INSTALLATION EINER SCHAUFEL EINER OFFSHORE-WINDTURBINE
PROCÉDÉ ET DISPOSITIF D'INSTALLATION DE PALE POUR L'INSTALLATION D'UNE PALE D'UNE ÉOLIENNE EN MER

(30) Priority: 16.06.2022 NL 2032193
(43) Date of publication of application: 23.04.2025
(73) Proprietor: Itrec B.V., 3115 HH Schiedam (NL)
(72) Inventor: WIJNING, Diederick Bernardus, 3115 HH Schiedam (NL)
(74) Representative: EP&C
(86) International application number: PCT/EP2023/066041
(87) International publication number: WO 2023/242310

(56) References cited:
- EP-A1- 2 441 955
- EP-A1- 2 923 017
- EP-A1- 3 568 372
- WO-A1-2020/043256
- WO-A1-2021/104677
- DE-U1- 202006 011 099

## Description

The present invention relates to a method and a blade installation device for installing a blade of an offshore wind turbine having a nacelle with a horizontal axis rotational hub that is arranged on top of a wind turbine mast. The device can also be used for de-installation of the blade and possibly for other hoisting jobs related to an offshore wind turbine.

Offshore wind turbines are in often mounted on a soil-bound foundation, e.g. on a monopile foundation, a jacket type foundation, etc. Installation of the blades, and potentially also of other components of the wind turbine, can be done using a crane on a vessel in floating condition or on a so-called jack-up type vessel.

In the wind industry, floating foundations of offshore wind turbines are seen as most promising for the future demand of wind generated electrical power. Herein the installation and/or de-installation of blades is more complex to be performed at the offshore location. In particular, at sea the installation of a blade is challenging, taking into account that nowadays wind turbine blades having a length of more than 60 meters have become prominent. Blade lengths of 100 meters and more are also envisaged, e.g. for wind turbines of more than 10 MW, e.g. 15 MW or even 20 MW as currently being designed. For example, the Vestas V236-15.0 MW wind turbine has blade of about 115 metres. The hub height of such large capacity wind turbines is also very significant, e.g. over 120 meters.

A horizontal axis rotational hub of a sizable offshore wind turbine, e.g. of several megawatts, commonly has three blade mounting structures. Each blade mounting structure commonly includes a bearing allowing for variation of the pitch angle of the blade. The bearing commonly has a ring, e.g. an outer ring, attached to the hub body and a ring, e.g. an inner ring, to be attached to a root end of the rotor blade. In the industry a bolted connection between the root end of the blade and the blade mounting structure, e.g. the inner ring of the bearing, is the common standard. Nowadays a T-bolt fastening arrangement is often employed. The bolted connection commonly involves a circular array of long bolts extending from a stern face of the root end of the blade, with the blade mounting structure having a corresponding array of bolt holes in which the bolts are to be received. A nut is then commonly tightened on each bolt. Introducing the multitude of bolts simultaneously into the bolt holes requires an accurate alignment of the wind turbine blade relative to the blade mounting structure, which is already challenging due to the size and weight of the blade, wind effects, etc. Also, at sea, the nacelle and its hub can be subject to motion, e.g. due to waves and/or waves acting on the wind turbine.

In the industry it is commonly known to use a jack-up vessel with a major crane that is used to install the blades of the offshore wind turbine having a soil bound foundation. For example, reference is made to WO2014/125461.

WO2012/002809 discloses a jack-up vessel equipped with a lifting device that is configured to autonomously position a wind turbine blade in such a way that it can be mounted on a wind turbine tower. The lifting device comprises a pivotal boom structure and a positioning device which can be displaced along the boom.

WO2020/085902 discloses a vessel that is to be used in floating condition when installing a blade on an offshore wind turbine. The vessel is equipped with a lifting device for the blade that is dedicated to the six-o'clock installation of a wind turbine blade on the horizontal axis rotational hub. The lifting device has a pivotal boom and a wind turbine blade root end spatial orienting and support device with multiple actuators allowing multiple degrees of freedom of the movable blade root end retainer. Using this lifting device wind turbine blade is brought in a generally vertical orientation and underneath the blade mounting structure of the hub. in said six-o'clock position.

The challenge is further increased when the wind turbine is installed using a vessel in floating condition, so subject to sea-induced motion during the installation. Floating foundations are envisaged e.g. in deeper water, where also the vessel will be floating as the depth is too much for a jack-up type vessel. In a floating foundation situation, the wind turbine mast may be significantly affected by the sea state during blade installation, e.g. depending on the actual design of the foundation.

A known approach for installation of floating foundation offshore wind turbines is to perform the entire installation not at sea where the offshore turbine is to be moored, but in a sheltered location, e.g. in a port, estuary, fjord. Reference is made to the Hywind project, wherein complete installation was done in a fjord in Norway. Here the mast and nacelle were erected on shore and the blades were attached using land-based cranes. Then the entire assembly was lifted by a major crane vessel and positioned on a spar-type floating foundation. Then the entire offshore wind turbine was towed across the North Sea to its operational location near the coast of Scotland. Due to the spar type foundation, very deep water is needed which excludes many shoreline locations. Another type of floating foundation is, for example, disclosed in WO2009/131826. This design has a reduced draft compared to a spar type foundation. The foundation has at least three stabilizing columns interconnected by a frame. Also for this design it is envisaged that installation is done in the manner as done for the Hywind project. The towing of completely assembled floating wind turbines from a shoreline location to the operational site, is very complex and time-consuming. Another type of floating foundation is the tension-leg type foundation.

An alternative approaches to install an offshore wind turbine are discussed in, for example, WO2021/104677. Herein a crane vessel in floating condition is used. In one approach, the nacelle is placed on an auxiliary support tower onboard the vessel. The crane of the vessel is then used to place the nacelle temporarily on this tower. Then the blades are attached to the hub. The blade is lifted in horizontal orientation thereof using the crane. The root end of the blade is supported by a blade manipulator assembly that includes a trolley which travels over a track on an elongated guide associated with the auxiliary support tower. The weight of the blade is predominantly carried by the crane. The assembly of nacelle with all blades is then lifted and placed on top of the wind turbine mast.

In another approach in WO2021/104677, the nacelle is placed or already present on top of the wind turbine mast first, and then the blades are attached, all done using the crane of the vessel. In order to align the root end of the blade with the hub use is made of a positioning mast that has its lower end coupled via a hinging joint to the crane vessel and it upper end rests against the wind turbine mast. A blade manipulator assembly that engages on the root end of the blade is present at the upper end of the positioning mast.

In yet another approach in WO2021/104677, a blade manipulator assembly that engages on the root end of the blade is secured temporarily at the top end of the wind turbine mast. The blade is then lifted using the crane of the vessel and the root end is engaged with this blade manipulator assembly. Then the blade is attached to the hub.

The present invention aims to provide measures that allow for improved installation of a wind turbine blade on a horizontal axis rotational hub that is arranged on top of a wind turbine mast at sea.

The improvement may reside in the efficiency of the blade installation, e.g. the installation requiring less time and/or effort, and/or being possible within an enlarged weather window, such as in stronger winds and/or less advantageous sea state.

It is an aim of the present invention to improve the installation of blades on offshore wind turbines that have a floating foundation. This blade installation can also take place in the process of replacing a damaged blade by a new blade.

The invention provides a method according to claim 1 for installing a blade on a horizontal axis rotational hub of an offshore wind turbine.

The offshore wind turbine comprises a wind turbine mast that is supported by a foundation, of the offshore wind turbine and comprises a nacelle with a horizontal axis rotational hub provided on the top end of the wind turbine mast.

The method is considered highly advantageous in particular when the foundation is a floating foundation.

In the method use is made of a blade installation device that is adapted to be temporarily installed on the offshore wind turbine for the installation of one or more blades onto the hub. As discussed, the device will also allow for de-installation of blades, e.g. when exchanging a damaged blade for a new blade.

The blade installation device is transported, e.g. on a crane vessel, to the offshore wind turbine. The wind turbine is, preferably, already installed at its operational site or in close proximity thereof. For example, a floating foundation is already moored at its operational site at sea.

A crane of a vessel, e.g. of the same vessel used for transportation of the blade installation device, is used for the temporary installation of the blade installation device on the offshore wind turbine.

The blade installation device comprises a mounting part that is mounted on the foundation of the offshore wind turbine and/or on a lower portion of the wind turbine mast. For example, the lower portion of the wind turbine mast is provided with a support bracket onto which the mounting part can be rested.

The blade installation device comprises a crane mast that is erected vertically in an operational position wherein the crane mast is supported by the mounting part and extends parallel and adjacent to the wind turbine mast. The crane mast has a track.

The blade installation device comprises at least one support bracket that is engaged with the wind turbine mast and laterally supports the erected crane mast.

The blade installation device further comprises a blade manipulator assembly comprising:
- a trolley engaging the track of the crane mast and being movable along the track in vertical direction,
- a trolley drive for moving the trolley along the track,
- a blade manipulator comprising one or more blade root engagement members that are configured to engage a root end of the blade, wherein the blade manipulator is supported by said trolley, e.g. via an actuating assembly, to enable one or more degrees of freedom of the blade manipulator relative to the trolley.

The blade installation device further comprises a hoist system with a crane boom that is mounted to a top end of the crane mast, a winch, and a winch driven cable.

Preferably, the crane boom has a length such that the winch driven cable can engage on a horizontally oriented blade at the center of gravity (COG) thereof, whilst the manipulator assembly engages the root end of the blade. In practical embodiments, the COG of the blade can be more than 25 meters away from the root end, e.g. between 30 and 40 meters away from the root end. It will be appreciated that this induces significant loads on the crane mast that is to be structured accordingly.

In an embodiment, the blade is suspended from the hoist system by a spreader structure that extends along the length of the blade, e.g. above the blade, from an inner end thereof that is at or near the root of the blade to an outer end that is beyond the center of gravity of the blade. Herein the cable of the hoist system, preferably, engages on the spreader structure in vertical alignment with the centre of gravity of the blade so that the blade is effectively engaged at the COG thereof by the spreader structure.

When use is made of a spreader structure that holds the blade at two locations that are inwardly and outwardly remote from the actual COG thereof, it is possible to have a blade lifting tool of the crane of the vessel engage on the blade directly at its COG. So, the blade is then transferred by use of the crane of the vessel and the blade lifting tool to the lower receiving position and is then engaged by the spreader structure. Then the weight of the blade can be transferred to the spreader structure, so to the hoisting system temporarily placed on the offshore wind turbine. The vessel mounted crane is then released from the blade, preferably the blade lifting tool thereof being released from the blade.

Preferably, the boom is a pivotal boom having its inner end pivotal about a horizontal pivot axis with a corresponding pivoting actuator assembly, e.g. with hydraulic actuators.

For example, the boom is a single segment rigid boom having its inner end pivoted to a base that is connected to the crane mast, e.g. a slewable base, and having its outer end provided with one or more departure sheaves from which one or more wind driven cables depend. In another embodiment, the boom is telescopic.

In another embodiment, the boom is an articulated boom composed of multiple boom segments, e.g. a knuckle boom.

For example, the boom is embodied as disclosed in WO2021/204938.

For example, the hoisting system provides for a first, second, and third cable that together define an inverted pyramid which diverges upwards from a blade lifting tool when handling the blade.

Preferably, the hoist system comprises a base with a slew bearing between the boom and the top end of the crane mast with a corresponding slew drive to allow for slew motion of the boom about a vertical slew axis, preferably the slew range being a full 360 degrees.

The method comprises lifting a blade to be installed to a blade installation position and attaching the blade that has been lifted to the blade installation position to the horizontal axis rotational hub of the offshore wind turbine. Preferably, the blade is in horizontal orientation in a lower receiving position thereof.

The method comprises:
- bringing the trolley in a lower position thereof and engaging the one or more blade root engagement members on the root end of the blade, and
- attaching the cable of the hoist system to the blade at a distance remote from the root end, preferably at a center of gravity of the blade.

Then the method comprises the lifting of the blade to the blade installation position by operating the winch of the hoist system and simultaneously moving the trolley along the track.

Preferably, the trolley is driven, at least during the lifting of the blade, by an associated trolley drive, e.g. a cable and winch drive or a rack and pinion drive. In another embodiment, the trolley passively follows the lifting motion of the blade that is caused by operation of the hoist system.

In an embodiment, a physical link, e.g. releasable, is established between a spreader or blade lifting tool of the hoist system and the trolley. This, for example, allows for an operation wherein that the trolley is effectively driven as the spreader that holds the blade is lifted by the hoist system. This link may also be of use when the spreader or blade lifting tool is to be lowered without a blade being held, wherein the link has the effect that undue sway motion of the spreader/blade lifting tool is prevented.

Preferably, the blade is kept in horizontal orientation while being lifted, so that both the lower receiving position thereof and the blade installation position are horizontal. Other approaches, e.g. wherein the blade is tilted to an inclined blade installation position are also envisaged. In embodiments, the blade is attached to the hub in an inclined orientation, e.g. including an angle of 5 - 40° with the vertical, e.g. between 10 - 25°. This inclined orientation is deemed less attractive in view of controlled lifting and attachment of the blade, in particular in view of the large dimensions of the blade.

The lifting of the blade from the lower receiving position thereof to the blade installation position is not performed by means of a crane onboard a vessel, as in for example WO2021/104677, but is done with the hoist system of the blade installation device that is temporarily placed on the wind turbine. The crane mast and the hoist system will need to have significant capacity in order to carry out the method, in particular as the center of gravity of the blade is spaced a significant distance from the crane tower and the weight of the blade is in practice also very significant. For example, the hoist system is configured to hoist at least a load of 50 tons at a distance of 20 meters from a centreline of the crane mast.

In particular when performed in the context of a floating foundation, the inventive approach has the advantage that the blade is under control by the cooperation of the manipulator assembly that travels up along the crane mast during lifting and the hoist system on top of the crane mast. All these components of the temporarily installed device are subject to the same motion(s) as the floating foundation and the wind turbine mast and nacelle thereon. This enhances the lifting and attachment steps for the blade compared to prior art approaches.

Once the installation of one or more blades is completed, the blade installation device is removed from the offshore wind turbine.

The height of the crane mast will in practical embodiments be more than 80 meters, e.g. over 100 meters, in view of the size of offshore wind turbines.

In practical embodiments, it is proposed that the wind turbine mast plus a nacelle on top thereof are installed on the foundation at the operation location of the offshore wind turbine. For example, a crane vessel is employed to install a pre-assembly of wind turbine mast and nacelle in one operation on the foundation, e.g. a floating foundation. The crane thereof will obviously need to have a lifting capacity to handle this assembly, which may weight more than 1500 tonnes, even more than 2000 tonnes.

The blade installation device may also be used for other purposes than installation of a blade, e.g. used for exchanging a component from the nacelle of the wind turbine, e.g. for installation or replacing the gear box or generator of the wind turbine.

In embodiments, the blade manipulator assembly comprises an actuating assembly and an associated positioning system configured and operated to position the root end of the blade when attaching the blade to the hub.

In an embodiment, the actuating assembly is configured to enable multiple, e.g. six degrees of freedom of the blade root engagement members relative to the trolley. A six degrees of freedom system is e.g. known as a Stewart platform system. With six degrees of freedom there is mobility in X, Y, and Z- direction, as well as pitch, yaw, and roll. This allows accurate positioning of the blade root.

For example, the positioning system comprises one or more sensors to detect the actual position and/or motion of the blade relative to the mounting structure of the hub, e.g. during the phase of mating the blade root with the mounting structure.

For example, the actuating assembly is configured to dampen motion(s) of the blade, e.g. to dampen any sway motion(s) in a horizontal plane.

For example, the blade root engagement member(s) comprise one or more movable clamping parts, which are movable between an open position to receive the blade root and a closed position wherein the blade root is clamped.

In an embodiment, the trolley is moved along the crane mast by means of a corresponding winch driven cable of a trolley drive having a winch. In another embodiment, the trolley drive comprises a rack and pinion drive system.

In an embodiment, the vessel used for transportation of the blade installation device is a monohull vessel with one or more crane. For example, the vessel is equipped with two cranes along a side of the vessel, e.g. as disclosed in US6932326. For example, the two cranes along a side of the vessel are used together for transfer of the blade installation device between the vessel and the offshore wind turbine.

In an embodiment, the vessel used for transportation of the blade installation device is also used for transportation of the blades to be installed on the offshore wind turbine. For example, the vessel is equipped with one or more cranes that are first used to transfer the blade installation device to the offshore wind turbine, and then used for transfer of the blade to be installed from the vessel, e.g. from a blade rack mounted thereon, to the lower receiving position where the blade is then pick-up by the hoist system of the blade installation device.

In an embodiment, at the lower receiving position, the blade is first suspended from a vessel mounted crane, e.g. the crane having a heave compensation device to effectively counter heave of the blade in the lower receiving position, and the blade is then pick-up by the hoist system of the blade installation device and released from the vessel mounted crane. Herein, it is advantageous, if the blade is engaged at its root end by the blade manipulator before the load of the blade is transferred from the vessel mounted crane to the hoist system of the blade installation device.

In another approach, the blade is not transferred by a vessel crane from the vessel to the lower receiving position of the crane. Instead, it is envisaged that the hoist system of the blade installation device is used to pick-up the blade directly from a vessel, e.g. dedicated blade supply vessel. Herein the blade is held on the vessel by means of a heave compensated platform(s) so that the blade can be held in a heave compensated mode before the hoist system is engaged with the blade for its pick-up, e.g. using a blade lifting tool. Possible, the blade is then first lifted a bit to clear the vessel, or platform thereof, and only then brought into engagement with the manipulator assembly. So the blade is then first attached to the hoist system and then to the manipulator assembly. There after the blade is lifted to the blade installation position.

In an embodiment, the blade to be installed is not transported by the vessel that handles the blade installation device. For example, the blades are supplied by a supply vessel, e.g. on barge.

In an embodiment, the crane mast is a telescopic mast. Alternatively, the mast is an articulated crane mast, having multiple crane mast sections that are hinged to provide for a collapsed configuration of the crane mast and a deployed, erected configuration of the crane mast.

Preferably, the crane mast is self-erecting, like a self-erecting tower crane.

In embodiments, the mounting part of the blade installation device forms a crane base on which a crane mast composed of mast segments that are to be stacked one-by-one onto one another is erected. The blade installation device further comprises a crane mast lifting unit configured to repeatedly perform lifting actions in the process of erecting the crane mast.

In embodiments, the mast segments are embodied as latticed steel segments having main chords at the corners with a square horizontal cross-section.

Whilst known tower cranes, e.g. the Liebherr 1000 EC-B 125 Litronic Tower Crane has mast segments with a horizontal cross-section of 3.40m x 3.40m with a length of 5.80m, the present invention envisages embodiments with much larger segments. For example, the segments have a length/height of at least 15 meters, e.g. of between 15 and 30 meters, e.g. of about 25 meters. This allows to reduce the number of connections that are to be established when erecting the crane mast significantly. Normally, the segment length is governed by the demand for road-transportability which does not apply for the present invention. Also, the great length/height of the segments allows for an embodiment, wherein all segments are placed on the blade installation device ahead of the entire device with mast segments being transferred from a vessel, e.g. the crane vessel, to the offshore wind turbine.

For example, the crane mast segments are arranged in their vertical orientation and side by side on the blade installation device, e.g. in an array extending over an arc. In an embodiment, the blade installation device comprises a magazine in which the crane mast segments are stored, and which magazine is configured and operated to move the crane segments in succession from their respective storage position to the position where the crane segment is assembled with the crane mast or is lifted up to be assembled to the top of the crane mast. Preferably, the crane mast segments are stored vertically in the magazine.

For example, the magazine comprises a transport device, e.g. a cart, e.g. a skiddable cart, configured to engage and move a crane segment between its storage position and its assembly position.

In embodiments, the horizontal cross-section of the mast segments exceeds the mentioned 3.40m x 3.40m, e.g. being more than 4.00m x 4.00m.

In an embodiment of a self-erecting crane mast, the crane mast is assembled by stacking one crane segment on top of one or more already erected segments. For example, the hoist system herein comprises a hoisting unit comprising the crane boom and the winch mounted to hoisting unit base, e.g. having a slew bearing, and the crane mast lifting unit is arranged directly underneath the hoisting unit.

In another embodiment, the stacking of crane mast segments onto one another is done from below. Herein the lifting unit remains stationary and connected to the crane base in the crane mast assembly phase, with the crane mast being lengthened in upward direction from the lifting unit. This approach is favoured, in particular, when use is made of a large length/height crane segments as discussed above, as this avoids the need to hoist a new crane segment to the actual top of the crane mast in the assembly phase, e.g. as done in the exemplary Liebherr crane.

In a practical embodiment of the stacking from below approach, the lifting unit comprises a lifting unit frame allowing for successive passage of crane mast segments upward when erecting the crane tower. The lifting unit further comprises a lifting actuator mechanism, e.g. comprising hydraulic cylinders, configured and operated to perform a stepwise lifting of the crane mast. The lifting unit further may comprise a locking mechanism to lock the crane mast at appropriate moments in the lifting process.

In a practical embodiment, the hoisting unit comprising the crane boom and the winch mounted to a hoisting unit base, e.g. having a slew bearing, is mounted on the first crane mast segment and is moved up along the wind turbine tower along in the process of assembly of the crane mast.

In a practical embodiment of the self-erecting crane mast design, the mounting part or crane base is configured with two diametrically opposed locations for a lifting unit, allowing to select the most effective position of the lifting unit in view of on which side the crane mast is to be erected relative to the wind turbine mast.

The invention will now be discussed with reference to the drawings. In the drawings:
- figs 1a, 1b, 1c illustrate a part of an offshore wind turbine with a floating foundation and a wind turbine mast and nacelle mounted thereon,
- figs. 2a, 2b illustrate the installation of a blade on the wind turbine of figures 1a-1c using an embodiment of the method and of the blade installation device according to the invention,
- figs. 3a, 3b, 3c schematically illustrate the blade installation device,
- fig. 4 illustrates the blade installation device when transferred onto the wind turbine,
- figs. 5a, 5b illustrate a mast segment of the crane mast of the blade installation device,
- fig. 6 illustrates the use of a vessel for transportation and handling of the blade installation device as well as blades to be installed onto the wind turbine of figures 1a-1c,
- fig. 7 illustrates the transfer of the blade installation device from the vessel of figure 6 to the offshore wind turbine using the two cranes of the vessel,
- fig. 8 shows the transfer of figure 7 in another view,
- fig. 9 illustrates the transfer of a blade from the vessel to a lower receiving position of the blade,
- fig. 10 shows the blade transfer of figure 9 in another view,
- fig. 11 illustrates an alternative configuration of the blade installation device of figures 3a-c as well as an alternative approach to transfer of a blade,
- fig. 12 illustrates yet another alternative configuration of the blade installation device of figures 3a - c as well as an alternative approach to transfer of a blade,
- fig. 13 illustrates an embodiment of the invention, wherein the hoist system of the blade installation device picks up a blade directly from a vessel,
- fig. 14 illustrates the approach of figure 13 from above,
- figs. 15a, b illustrates a hoist unit of the blade installation device,
- figs, 16a, b illustrates an embodiment of the blade installation device.
- figs. 17a, b illustrate the lower end of the wind turbine mast connected to the foundation,
- figs. 18a - d illustrate the connection between the lower end of the wind turbine mast and the foundation of figures 17a,b.

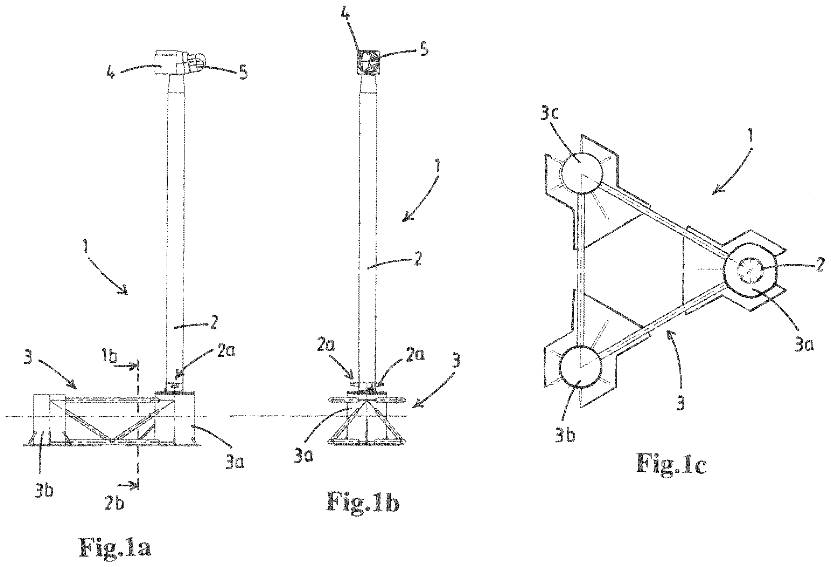

The figures 1a, 1b, 1c show, by way of example, a still incomplete offshore wind turbine 1.

Here the wind turbine mast 2 is supported by a foundation 3, here a floating foundation, of the offshore wind turbine. A nacelle 4 with a horizontal axis rotational hub 5 is provided on the top end of the wind turbine mast 2.

In figure 1b a section of the wind turbine 1 as indicated in figure 1a is shown.

In figure 1c the mast 2 is shown without the nacelle 4 thereon.

The depicted floating foundation 3 is of the type as discussed in WO2009/131826. This design has a reduced draft compared to a spar type foundation. The foundation 3 has three stabilizing columns 3a,b,c arranged in a triangular setting (seen from above) and interconnected by a frame.

In this example, the wind turbine mast 2 has been placed on one of the columns 3a. In other design the mast 2 could be supported elsewhere on the floating foundation 3.

As discussed, mounting the mast 2 plus the nacelle 4 with hub 5 can be done at a shoreline location, so that a tow-out of the incomplete wind turbine 1 to the operational position at sea is required. This towing of the wind turbine devoid of blades is expected to be less complex than a tow-out wherein the blades of the turbine are also present. In another, more preferred, approach, the mast 2 and nacelle 4 with hub 5 are mounted on the floating foundation 3 at sea, so at or in proximity to the operational position of the wind turbine 1 at sea. Preferably, this mounting is done when the floating foundation 3 is already moored at its final operational position.

It will be appreciated that the exemplary foundation 3 is just a practical example, and that other designs of the foundation (e.g. spar type, but also including non-floating soil-bound foundations) are also envisaged in the context of the present invention.

The figures 1a-c illustrate that the lower end of the mast 2 is provided with support brackets 2a that are designed to support the blade installation device 20 thereon. These support brackets 2a can be integrated with a mast foot connector member that is secured at the lower end of the mast 2 and that also serves to connect the mast 2 to a connector portion of the foundation. The same mast foot connector member could also serve as a connection for hoist cables that are used in the process of hoisting the mast 2 plus the nacelle 4 and hub 5 thereon onto the foundation 3.

The mast 2 could be assembled from separate mast sections, e.g. two or three or another number, e.g. using bolted connections.

For example, the mast 2 is made of steel.

For example, the mast 2 is tubular.

The wind turbine 1 as illustrated here is designed to have a 15 MW capacity.

The mast 2 has a length/height of at least 120 metres, here some 125 metres.

The weight of the mast 2 plus nacelle 4 and hub 5 is envisaged to be about 2200 tonnes in total for this 15 MW wind turbine 1 .

For the depicted 15 MW example, the blades 10 have a length of about 115 metres and a weight of about 74 tons each.

The invention concerns the process of installation of the blades 10 onto the horizontal axis rotational hub 5, here the three blades 10 as is common in the offshore wind industry.

So, effectively a blade of some 74 tons has to be accurately aligned with the mounting structure of hub 5 at a height of more than 120 meters above sea level with the foundation 3 being in floating condition, so subject to motion(s) due to waves and/or wind.

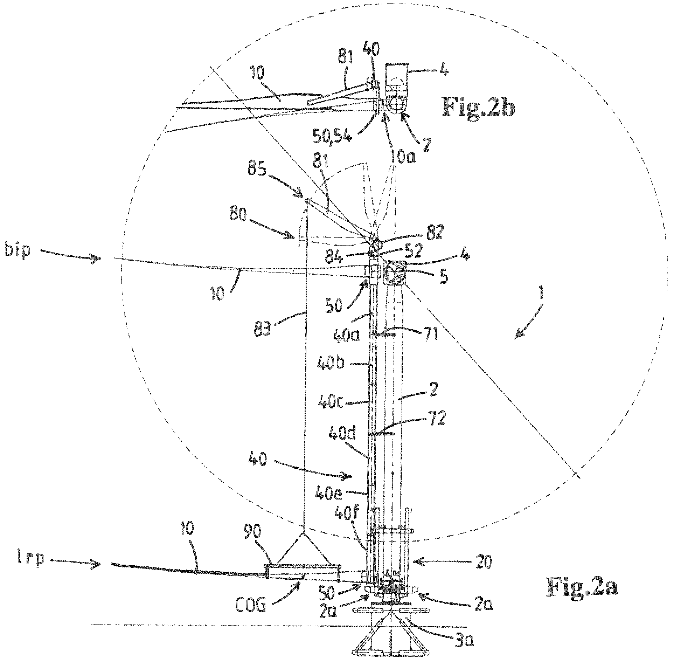

As illustrated in figures 2a,b the inventive method includes that a blade installation device 20 is temporarily installed on the offshore wind turbine 1 for the installation of one or more blades 10 to the hub 5 thereof.

Figure 2a shows a side view with the blade 10 both in a lower receiving position and in the blade installation position thereof to elucidate the process of blade installation.

Figure 2b shows a top view.

Later in this document it will be discussed that this blade installation device 20 is transported, e.g. on a crane vessel 200, to the offshore wind turbine 1.

A crane, in fact two cranes 220, 240 in this example, of the vessel 200 are used for the temporary installation of the blade installation device 20 on the offshore wind turbine 1 so for the transfer of the device 20 between the vessel and the turbine and back to the vessel after completion of the blade installation.

The blade installation device 20 comprises a mounting part 30, that could also be called a crane base, which is temporarily mounted on the foundation of the offshore wind turbine and/or on a lower portion of the wind turbine mast. As illustrated, it is envisaged here that the mounting part 30 is placed on the brackets 2a at the lower end of the mast 2 of the turbine 1.

The blade installation device 20 further comprises a crane mast 40 that is erected vertically in an operational position (see figure 2), wherein the crane mast 40 is supported by the mounting part 30 and extends parallel and adjacent to the wind turbine mast 2. This crane mast 40 has a track 60 over a major portion or all of the height thereof.

The blade installation device 20 comprises one or more lateral support brackets 71, 72 that are each engaged with the wind turbine mast 2 and laterally support the erected crane mast 40. Such brackets are known in many forms, e.g. with one or more sling members that can be tensioned and/or with movable clamping parts and/or magnetically operating brackets, etc. In embodiments, the one or more lateral brackets 71, 72 can move along the height of the mast 2 in the assembly process of the crane mast 40.

The blade installation device further comprises a blade manipulator assembly 50 that here comprises:
- a trolley 51 engaging the track 60 of the crane mast 40 and being movable along the track in vertical direction,
- a trolley drive 52 for moving the trolley 51 along the track 60,
- a blade manipulator 53 comprising one or more blade root engagement members 54 that are configured to engage a root end of the blade, wherein the blade manipulator is supported by the trolley 51 to enable one or more degrees of freedom of the blade manipulator relative to the trolley 51.

As shown in figure 2, the blade installation device 20 further comprises a hoist system 80 with a crane boom 81 that is mounted to a top end of the crane mast 40, a winch 82, and a winch driven cable 83. Preferably, as here, the winch 82 is also present at the top end of the crane mast 40.

The winch 82 can be an active heave motion compensation winch (AHC winch), and/or another heave motion compensation device can be part of the hoist system 80. The possibility to have a heave compensated mode of the hoist system can be of relevance in view of the transfer of a blade from a crane mounted on a vessel to the hoist system 80. Preferably, this transfer is done with both the vessel crane and the hoist system 80 in heave motion compensating mode thereof.

Figure 2 illustrates that the method comprises lifting a blade 10 to be installed from a lower receiving position (Irp) to a blade installation position (bip) and attaching the blade 10 that has been lifted to the blade installation position to the horizontal axis rotational hub 5 of the offshore wind turbine 1. This is done by use of the blade installation device 20 that has been temporarily mounted on the wind turbine 1.

The method has an initial phase, which comprises:
- bringing the trolley 51 in a lower position thereof, e.g. at or in proximity to the lower end of track 60, and engaging the blade root engagement members 54 on the root end of the blade 10 that is in a lower receiving position (Irp) thereof (e.g. in a practical embodiment held at said position by a vessel crane or already held by the hoist system 80), and
- attaching the cable 83 of the hoist system 80 to the blade 10 at a distance remote from the root end, preferably at a center of gravity (COG) of the blade 10.

As discussed, during this initial phase the blade 10 could be held by a vessel crane that is operated in heave motion compensating mode. Also the hoist system 80 can be operated in heave compensating mode, so that the blade 10 is effectively more or less stationary in vertical direction during the initial phase. In this regard, it is envisaged that in an embodiment also the trolley drive provides for a heave compensating mode of the trolley, which facilitates engaging the members 54 with the root end of the blade 10.

The method then, following the initial phase, comprises a lifting phase with lifting of the blade 10 from the lower receiving position (Irp) thereof to the blade installation position (bip) by operating the winch 82 of the hoist system 80 of the device 20 and simultaneously moving the trolley 51 of the device 20 along the track 60 on the crane mast 40 by means of the trolley drive 52.

The crane mast 40 and track 60 thereon extend to such a height that the blade root, still engaged by the blade root engagement members 54, is horizontally aligned with the blade mounting structure (e.g. including a pitch bearing) of the hub 5.

It will be appreciated that during the lifting of the blade 10, the blade 10 is effectively guided by both the blade manipulator assembly 50 and the hoist system 80, which both are subject to the same motion(s) as the floating foundation 3 and the mast 2 and nacelle 4 with hub 5 placed thereon.

Figure 2 shows that, in the illustrated example, the crane boom 81 is a single segment rigid boom having its inner end pivoted to a base 84 that is connected to the top end of the crane mast 40, here a slewable base. For example, the base 84 includes a slew bearing and slew drive configured to slew the crane boom 81 about a vertical slew axis, e.g. over 360 degrees.

It is illustrated here, that the outer end of the crane boom 81 is provided with one or more departure sheaves 85 from which one or more wind driven cables 83 depend.

In another embodiment, the boom is telescopic.

The boom 81 is a pivotal boom having its inner end pivotal about a horizontal pivot axis with a corresponding pivoting actuator assembly, e.g. with hydraulic actuators.

Figure 2 shows that the crane boom 81 has a length such that the winch driven cable 83 can engage on a horizontally oriented blade 10 at the center of gravity (COG) thereof, whilst the root end of the blade 10 is engaged by the root end manipulator assembly 50. So, the cable 83 is then vertically aligned with the COG, which allows to carry all or nearly all of the weight of the blade 10 with the hoisting system and so that only some weight rests on the manipulator. It is noted that, in embodiments, the weight distribution over the hoist system 80 and the manipulator could be different in that more of the blade weight is carried by the manipulator.

In practical embodiments, the COG of the blade can be more than 25 meters away from the root end, e.g. between 30 and 40 meters away from the root end. Often, the COG is about 1/3 of the length of the blade 10 away from the root end of the blade 10.

It will be appreciated that the inventive use of the hoist system induces significant loads, both vertical loads and bending loads) on the crane mast 40 that is to be structured accordingly.

In embodiments, the hoist system 80 may include a counter ballast. The provision of a counter ballast is, however, less preferred in the context of the present method as it increase the total mass at the height of the hoist system, and thus impacts the overall stability in particular when the foundation 3 is a floating foundation. Therefore, it is preferred that the system 80 is devoid of a counter ballast.

Figure 2 illustrates an embodiment, wherein the blade 10 is suspended from the hoist system 80 by a spreader structure 90 that extends along the length of the blade 10, here above the blade, from an inner end thereof that is at or near the root of the blade to an outer end that is beyond the centre of gravity COG of the blade. Herein the cable 83 of the hoist system engages on the spreader structure in vertical alignment with the center of gravity COG of the blade 10 so that the blade 10 is effectively engaged at the COG thereof by the spreader structure 90.

In an embodiment, the spreader 90 is configured to the linked to the trolley 51, e.g. so as to control the inner end of the spreader, e.g. so as to avoid or reduce sway motions of the spreader (e.g. when no blade 10 is held by the spreader and the assembly 50, e.g. during downward travel of the spreader and trolley and/or in a pick-up phase when a new blade is to be pick-up by the device 20).

In an embodiment, the spreader 90 is provided with a motion damping device, e.g. to dampen sway of the spreader (and blade) in a horizontal plane, e.g. during hoisting. For example, an active motion damping ballast member system is provided.

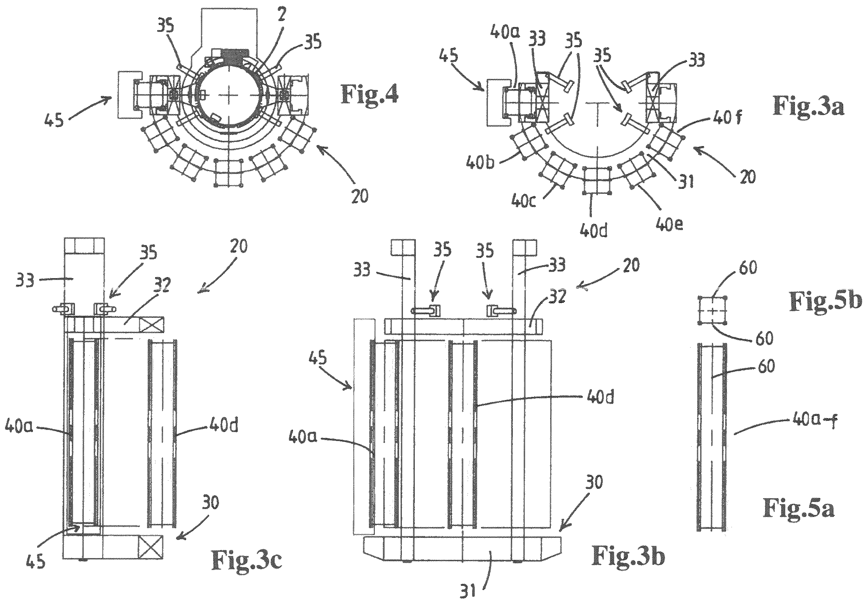

With reference to figures 3a-c, 4, and 5a,b now the illustrated example of the blade installation device 20 will be discussed in more detail.

The mounting part 30, in this example, comprises a lower c-shaped (in top view) frame member 31 and an upper c-shaped frame member 32. The members 31, 32 are interconnected by vertical frame members 33.

The lower member 31 is configured to be rested on the turbine 1, here on diametrically opposed brackets 2a thereof at the lower end of the mast 2.

The device 20, here the upper member 32, has multiple clamping members 35, here hydraulic cylinders, which are configured to clamp onto the exterior of the mast 2 at various circumferential positions thereof so as to hold the device 20 in position on the mast 2.

In the depicted example, as preferred in the context of the invention, the crane mast 40 is self-erecting, like a self-erecting tower crane.

Generally, the crane mast 40 is composed of mast segments 40a, 40b, 40c, .. 40f, preferably less than ten segments, here just six segments, which are to be stacked one-by-one to form the crane mast 40.

In the depicted example, as preferred in the context of the invention, the stacking of crane mast segments 40a, 40b, 40c, .. 40f onto one another is done from below.

The stacking is done by making use of a lifting unit 45 of the blade installation device 20, which unit 45 is configured to repeatedly perform lifting actions in the process of erecting the crane mast 40.

In a practical embodiment of the stacking from below approach, the lifting unit 45 comprises a lifting unit frame 46 allowing for successive passage of crane mast segments 40a, 40b, 40c, .. 40f upward when erecting the crane tower. For example, a new crane mast segment is introduced laterally into the frame of the unit 45, whilst the preceding crane mast segment has been lifted so that the new segment can be positioned underneath and then connected to the preceding crane mast segment.

In embodiments, the lifting unit 45 comprises a lifting actuator mechanism, e.g. comprising hydraulic cylinders, configured and operated to perform a stepwise lifting of the crane mast 40 during the mast assembly phase. The lifting unit 45 further may comprise a locking mechanism to lock the crane mast 40 at appropriate moments in the lifting process and/or when the mast 40 has been completed.

This lifting unit 45 remains stationary and connected to the mounting part, crane base, 30 in the crane mast assembly phase, with the crane mast 40 being lengthened in upward direction from the lifting unit.

Figures 5a, b show that the mast segments 40a, 40b, 40c, .. 40f are each embodied as a latticed crane mast segment having main chords at the vertical corners. Here the segments have a square horizontal cross-section, but other cross-sections, e.g. rectangular, polygonal, circular, are also envisaged. The chords can be connected, for example, via diagonal lattice members as is known in the art.

Whilst known tower cranes, e.g. the Liebherr 1000 EC-B 125 Litronic Tower Crane has mast segments with a horizontal cross-section of 3.40m x 3.40m with a length of 5.80m, the present invention envisages embodiments with a significantly lower number of much larger segments 40a, 40b, 40c, .. 40f.

For example, the segments 40a, 40b, 40c, .. 40f each have a length/height of at least 15 meters, e.g. of between 15 and 30 meters, e.g. of between 20 - 25 meters. This allows to reduce the number of connections that are to be established when erecting the crane mast 40 significantly.

As shown the great length/height of the segments 40a, 40b, 40c, .. 40f allows for an embodiment, wherein all segments 40a, 40b, 40c, .. 40f that make up the crane mast 40 are placed on the blade installation device 20 ahead of the mounting part 30 of the device 20 together with the mast segments 40a, 40b, 40c, .. 40f being transferred from a vessel to the offshore wind turbine 1.

As shown, the crane mast segments 40a, 40b, 40c, .. 40f are arranged in their vertical orientation and side by side on the blade installation device 20, e.g. in an array extending over an arc.

In an embodiment, as shown schematically, the blade installation device 20 comprises a magazine in which the crane mast segments 40a, 40b, 40c, .. 40f are stored, and which magazine is configured and operated to move the crane segments 40a, 40b, 40c, .. 40f in succession from their respective storage position to the position where the crane segment is assembled with the crane mast.

Preferably, the crane mast segments 40a, 40b, 40c, .. 40f are stored vertically in the magazine.

For example, the magazine comprises a transport device, e.g. a cart, e.g. a skiddable cart, configured to engage and move a crane segment between its storage position and its assembly position.

In embodiments, the horizontal cross-section of the mast segments 40a, 40b, 40c, .. 40f exceeds the mentioned 3.40m x 3.40m, e.g. being more than 4.00m x 4.00m.

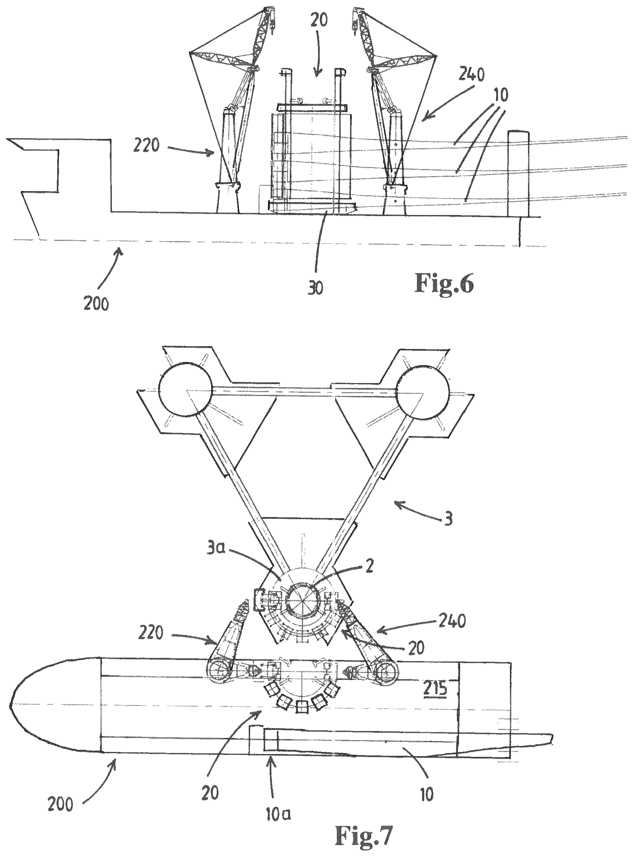

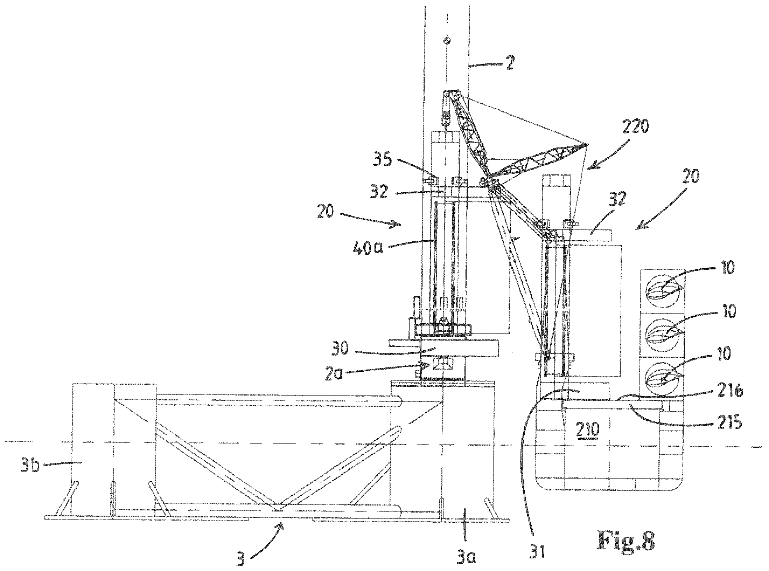

In figures 6, 7, and 8 it is illustrated that the blade installation device 20 is transported to the site of the wind turbine 1 by means of a vessel 200. In the depicted example, the vessel is a Jumbo J-class vessel, e.g. the Jumbo Jubilee heavy lifting vessel.

The vessel 200 has two cranes 220, 240 arranged along a side of the hull of the vessel 200. The cranes 220, 240 are so-called mast cranes provided with an auxiliary jib system to increase the reach of the cranes 220, 240. The mast cranes 220, 240 are sizable cranes, e.g. having a regular hoist capacity of some 900 tons each. As shown, even with the auxiliary jib thereon, these cranes 220,240 cannot reach the enormous height of the hub 5 of the wind turbine, so they never could be of use to lift the blade 10 that such height.

The vessel 200 has a hold 210 that can be covered by hatches 215 to form a load bearing upper deck 216. The blade installation device 20 can be placed on this deck 216.

Other vessels 200 are, of course, also possible in the context of the present invention.

As shown, it is envisaged that the vessel 200 also transports a set of blades 10 for a wind turbine 1, here three blades 10, stacked in a rack along the other side of the hull. As discussed below, in an alternative approach, the blades 10 are transported to the site of the wind turbine 1 using another vessel, e.g. a dedicated supply vessel for the blades.

The vessel 200 has a dynamic positioning (DP) system allowing to manoeuvre and keep the vessel 200 fairly close to the floating foundation 3, in particular in this example close to the stabilizing column on which the mast 2 has been placed.

The cranes 220 and 240 are used in combination to lift the blade installation device 20, here without the hoist system yet with the crane mast segments, off the deck 216 and to transfer this device 20 onto the wind turbine 1. Herein the c-shape of the main framework of the device 20 is placed around the lower portion of the mast 2. As explained, the mounting part 30, here the lower frame member 31, is made to rest on the brackets 2a at the lower end of the mast 2. As explained, the clamping members 35 are operated to clamp the device 20 onto the mast 2.

The figures 6, 7, 8 illustrate that the device 20 is transferred from the vessel 200 to the wind turbine 1 with all, here six, crane mast segments being present on the device 20. This avoids the need for transferring those crane mast segments at a later stage.

The figures 6, 7, 8 illustrate that the device 20 transferred from the vessel 200 to the wind turbine 1 without the hoist system 80 being integrated. This system 80 is transferred by means of one or both of the cranes 220, 240 in a next step. Herein the system 80, e.g. the base 84 thereof, is connected to the top end of the uppermost crane mast segment 40a.

In an alternative approach, the hoist system 80 is already integral with the blade installation device 20 prior to the transfer thereof to the wind turbine 1, e.g. with the boom 81 being directed upwardly during this transfer process. Whether or not the hoist system 80 is already integrated ahead of the transfer may depend on the hoist capacity of the one or more cranes 220, 240 of the vessel 200.

Once the blade installation device 20 including the hoist system 80 is properly arranged and secured on the wind turbine, the crane mast assembly process can start. As explained, it is envisaged that the illustrated self-erecting crane mast is lengthened step by step in a process wherein a new crane mast segment is added underneath the already completed part of the crane mast 40. In this process, in embodiments, the one or more lateral brackets can be added as well.

Once the crane mast 40 has reached the desired height, here so that the manipulator can bring the root end of the horizontally orientated blade 10 in accurate alignment with a corresponding mounting structure of the hub 5, the process of transfer of blade and the subsequent lifting of the blade can be started.

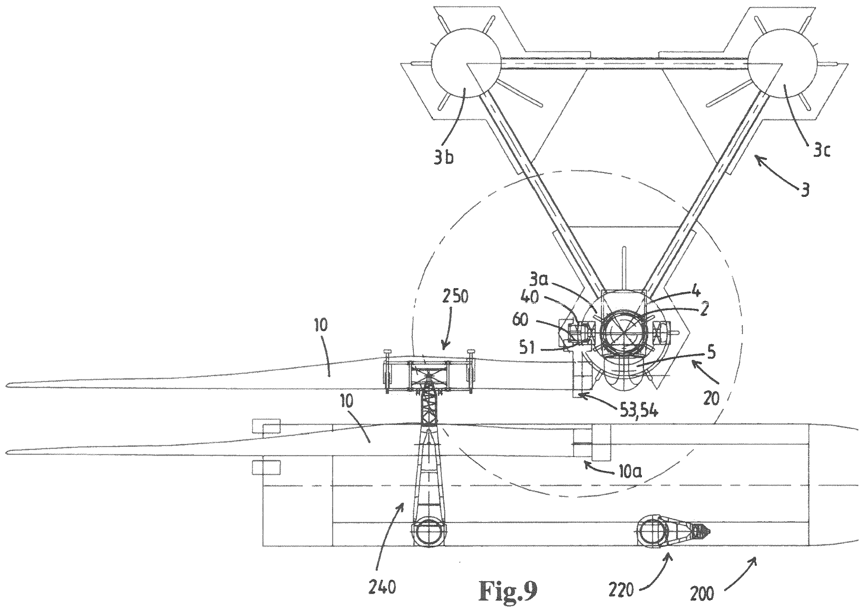

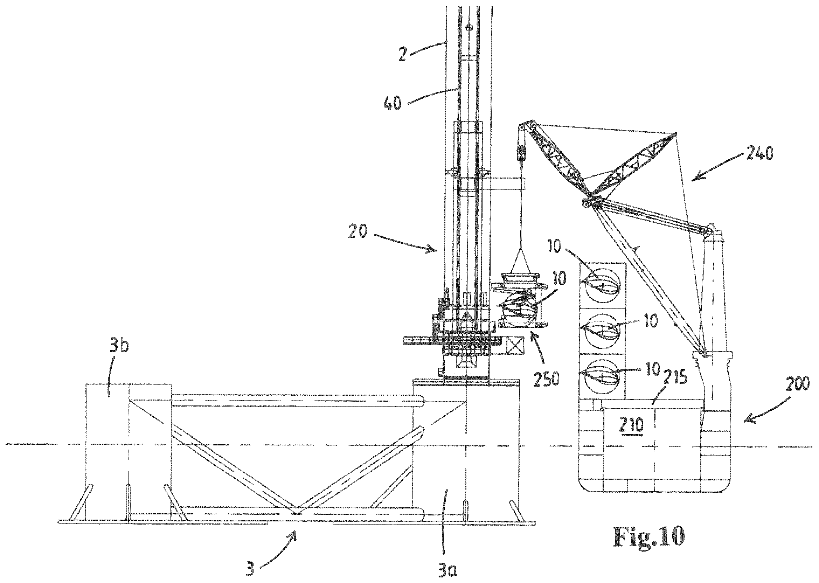

The figures 9 and 10 illustrate that the vessel 200 is manoeuvred so that the side where the blades 10 are stored on the vessel is now closest to the wind turbine 1.

A crane 240 is now used to pick-up a blade 10, here 115 metres long by way of example, in its horizontal orientation from the storage rack aboard the vessel 200. This is done using so-called blade lifting tool 250 that engages on the blade 10 at its COG. This is shown in figure 9. The blade 10, is then moved overboard to a lower receiving position thereof wherein the blade 10 still is horizontal.

As discussed, the crane 240 is now preferably operated in heave compensation mode, so that the blade 10 does not follow vessel motion and is more or less stationary suspended from the crane 240.

The figure 9 illustrates that the root end 10a of the blade 10 is mated with the manipulator by engaging the blade root engagement members 54 on the root end of the blade that is in the lower receiving position thereof. As discussed, it is preferred for heave motion compensation to be present in the manipulator as well, so that this engagement can be done with care. As discussed, often the blade root is provided with multiple bolts that are fragile and when collision occurs the bolts and/or their fastening in the blade may suffer damage.

As shown in figure 2, the spreader structure 90 can be lowered to above the blade 10. The spreader structure 90 can then be operated and/or handled so that the spreader structure holds the blade 10 at two locations that are inwardly and outwardly remote from the actual COG thereof, so outside of the blade lifting tool 250.

Once the blade is properly coupled to the spreader structure 90, the weight of the blade 10 is transferred from the lifting tool 250 and crane 240 to the spreader 90 and hoist system 80. The blade lifting tool 250 is then released from the blade 10 and the crane 240 is operated to move it away from the blade 10. Now the blade 10 is fully handled by the device 20.

The blade 10 is then lifted, whilst remaining horizontal, to its blade installation position by simultaneous operation of the hoist system 80 and the upward motion of the trolley 51. Once this height is reached, the blade can be attached to the hub 5. For example, the manipulator is configured and operated to move the blade root into accurate alignment with the mounting structure of the hub. This may involve motion in several directions, e.g. X,Y,Z directions but also include on or more rotary motions (e.g. about the longitudinal axis of the blade). The manipulator can also be configured and operated to provide for a mating motion of the blade 10, e.g. involving inserting the bolts into bolt holes on the mount structure of the hub 5. Once the blade 10 is properly attached to the hub 5, e.g. involving fitting nuts onto the bolts, the blade 10 can be released from manipulator. Possibly the hoist system is used in the process of moving the hub into the position for installation of the next blade.

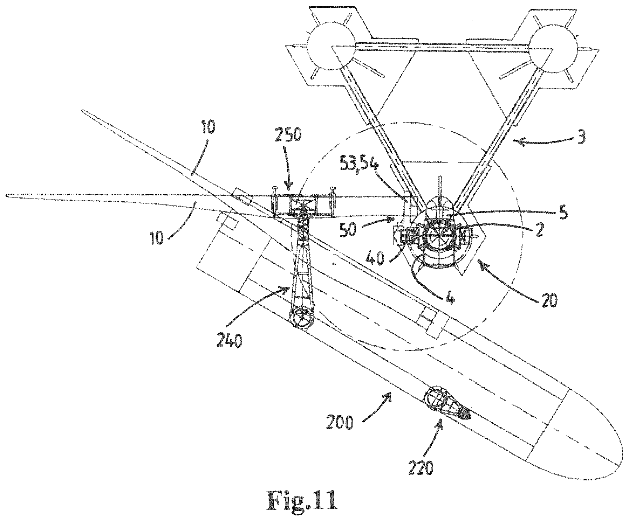

The figure 11 illustrates that the inventive approach and device 20 can, in embodiments, also be used to connect a blade 10 to the hub 5 when the nacelle 4 is oriented inward relative to the foundation 3. It is shown that this may require that the manipulator travels along another vertical side of the crane mast 40.

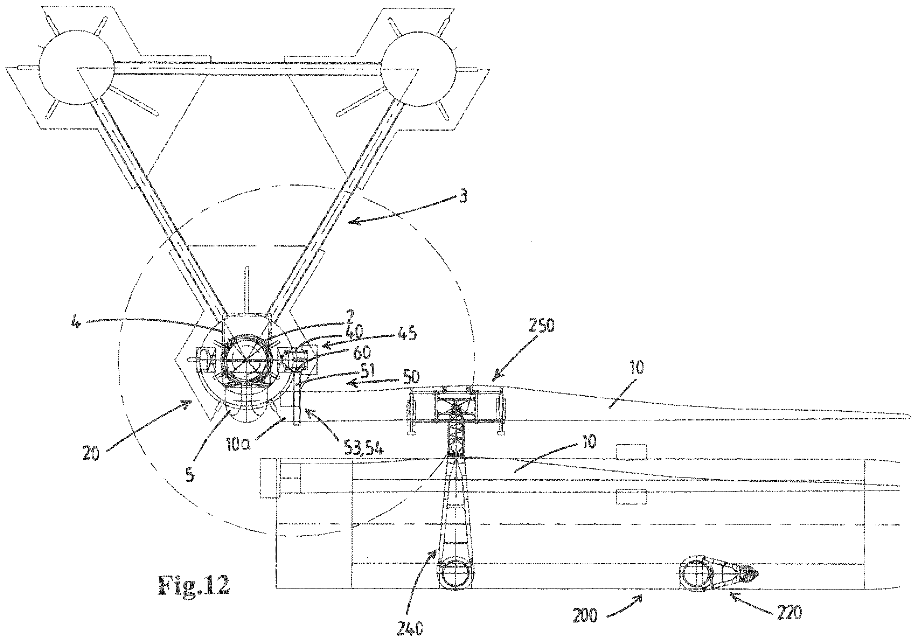

The figure 12 illustrates that that the inventive approach and device 20 can, in embodiments, also be used to connect a blade 10 to the hub 5 at the so-called 3 o-clock position instead of the 9 o-clock position of figure 9. This requires that the crane mast 40 is erected at the other side of the mast 2. In embodiments, as here, the device 20 is configured to allow for erection of the crane mast 40 either side of the mast 2 depending on which situation for mounting of the blade 10 is desired. In embodiments, one can even contemplate that the blades 10 of a wind turbine 1 are installed using the device 20 in different configurations.

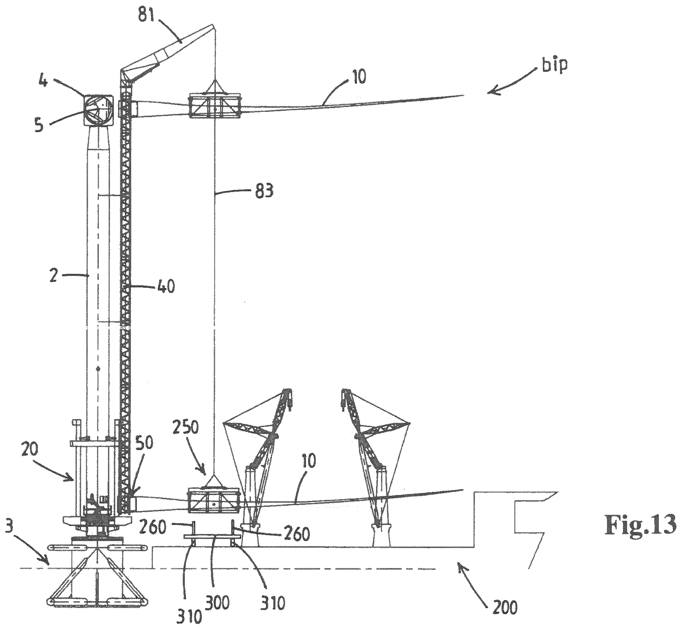

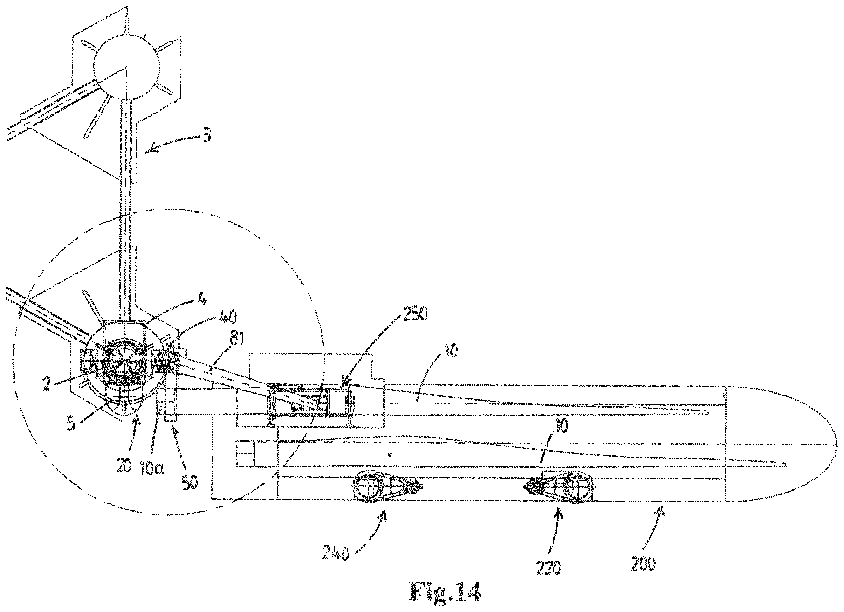

With reference to figures 13 and 14, another embodiment of the invention is discussed. Herein, the blade 10 to be installed on the wind turbine 1 is not transferred by a vessel crane from the vessel 200 to a lower receiving position where the blade is taken over by the hoisting system 80 of the blade installation device 20. Instead, it is envisaged that the hoist system 80 of the blade installation device 20 is used to pick-up the blade 10 directly from the vessel 220, possibly a dedicated blade supply vessel.

It is illustrated, that the blade 10 is initially held on the vessel 200 by means of a heave compensated platform 300 so that the blade 10 is held in a heave compensated mode before the hoist system 80 is engaged with the blade 10 for its pick-up. For example, the blade 10 is first stored onboard the vessel 220, e.g. in a storage rack thereof, and then transferred to the motion compensated platform 300. The motion compensated platform 300 could be configured and operated to synchronize the motion of the platform, in one or more directions, with the actual motion of the floating foundation 3. Primarily, the platform 300 can be configured and operated to compensate for heave motion of the vessel 200. Preferably, active heave motion compensating devices 310 are provided for the platform. One or more sensors could be employed to monitor motion of the foundation 3 and the platform heave compensation could be controlled (also) on the basis of said monitoring.

It is illustrated that a blade lifting tool 250 is suspended from the cable 83 of the hoist system 80. This blade lifting tool 250 is engaged with the blade 10, preferably at the COG thereof as is known in the art.

It is illustrated that the vessel 200, here in particular the platform 300, is provided with one or more guide members 260, e.g. guide pillars, that are configured to interact with the blade lifting tool 250 as it descends towards the blade 10 that is to be lifted. These guide members 260 avoid undue collision between tool 250 and the blade 10 in the mating process.

Once the blade 10 is coupled to the tool 250, the hoisting system is operated to lift the blade 10 off the vessel 200, here off the platform 300, to the height of the manipulator assembly 50.

Then the blade root 10a is, in this depicted example, mated with the manipulator assembly 50 that is in its lower position along the crane mast 40. So the blade 10 is here first attached to the hoist system 80, then lifted off the vessel 200, and then the blade root 10a is engaged with the manipulator assembly 50. There after the blade 10 is lifted to the blade installation position bip. As preferred, when present, the trolley 51 of the assembly 50 is driven along the mast along with the lifting of the blade 10 by the hoist system 80 so that the blade 10 remains horizontal. At the installation position, the blade root 10a is secured to the mounting structure of the hub 5 of the wind turbine.

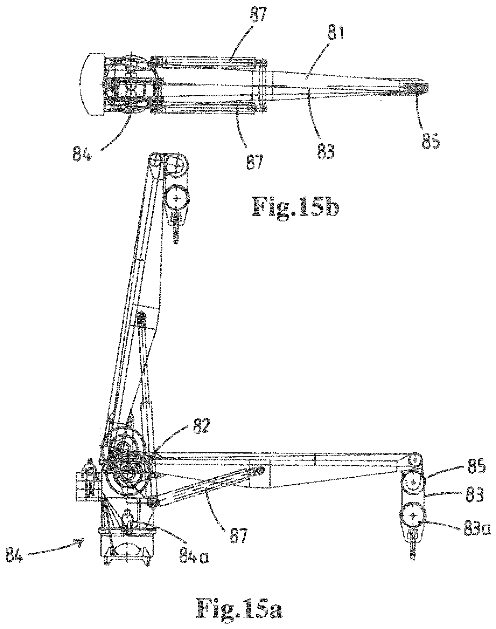

Figures 15a, b illustrate an example of a hoisting unit 86 of the hoist system 80.

As shown the hoisting unit 86 has a base 84 that includes a slew bearing and slew drive 84a configured to slew the crane boom 81 about a vertical slew axis, e.g. over 360 degrees.

The crane boom 81 is a single segment rigid boom having its inner end pivoted to the slewable base 84 that is to be connected to the top end of the crane mast 40.

The outer end of the crane boom 81 is provided with one or more departure sheaves 85 from which one or more wind driven cables 83 depend. Here a crane hook 83a is suspended from the one or more cables 83.

The boom 81 is a pivotal by means of a corresponding pivoting actuator assembly, here with hydraulic actuators 87.

The unit 86 also includes a winch 82, here mounted to the boom 81 near the inner end thereof. The winch 82 has a drum that stores the cable(s) 83.

The boom 81 has a length such that the winch driven cable 83 can engage on a horizontally oriented blade 10 at the center of gravity (COG) thereof, whilst the root end of the blade 10 is engaged by the root end manipulator assembly 50. So, the cable 83 is then vertically aligned with the COG, which allows to carry all or nearly all of the weight of the blade 10 with the hoisting system and so that only some weight rests on the manipulator. It is noted that, in embodiments, the weight distribution over the hoist system 80 and the manipulator could be different in that more of the blade weight is carried by the manipulator.

For example, the boom 81 has a length (as shown) of 35,5 meters from the slew axis.

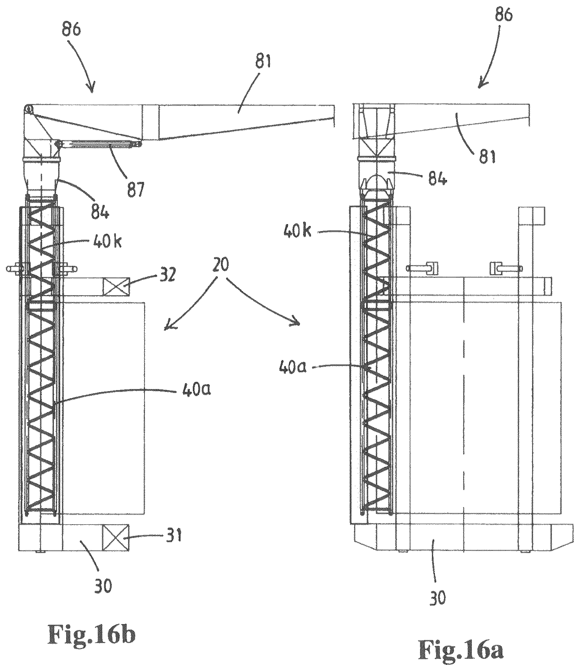

The figures 16a, b illustrate the blade installation device 20 with the hoist unit 86 fitted to the top end of the crane mast 40 that still has to be erected to its final length/height. As visible, a half-length crane segment 40k is placed on top of crane mast segment 40a so that the lifting unit 45 can properly cooperate with this initial section of the crane mast 40. As discussed, the blade installation device 20 is transferred onto the wind turbine 1 in this complete state, as preferred and discussed also with all crane mast segments thereon.

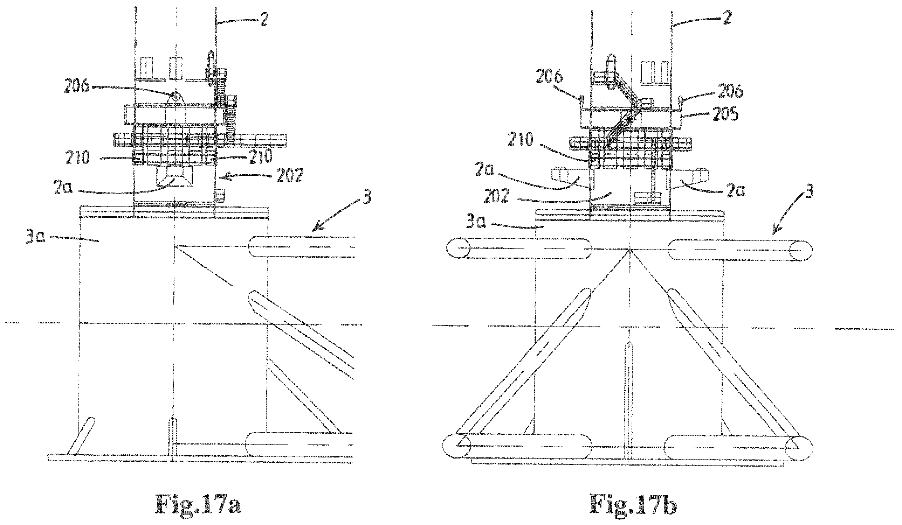

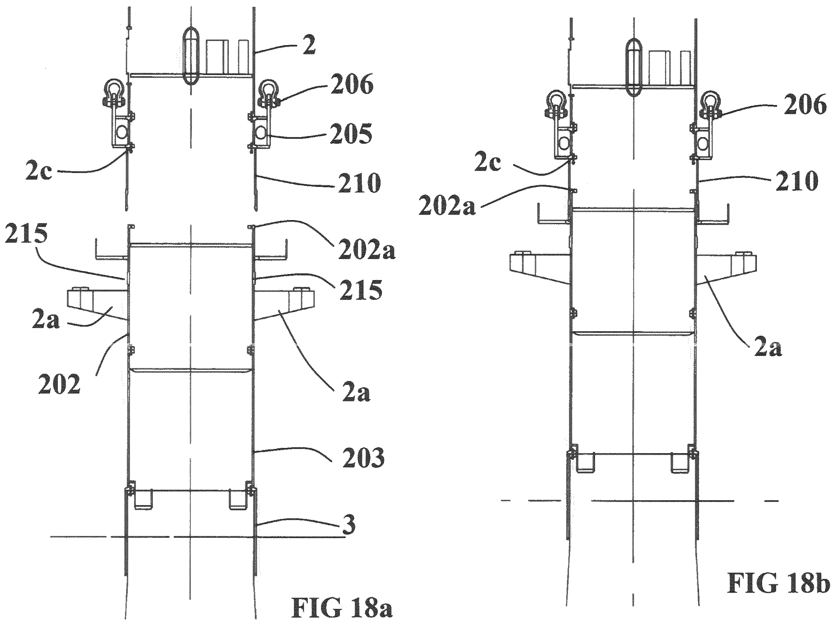

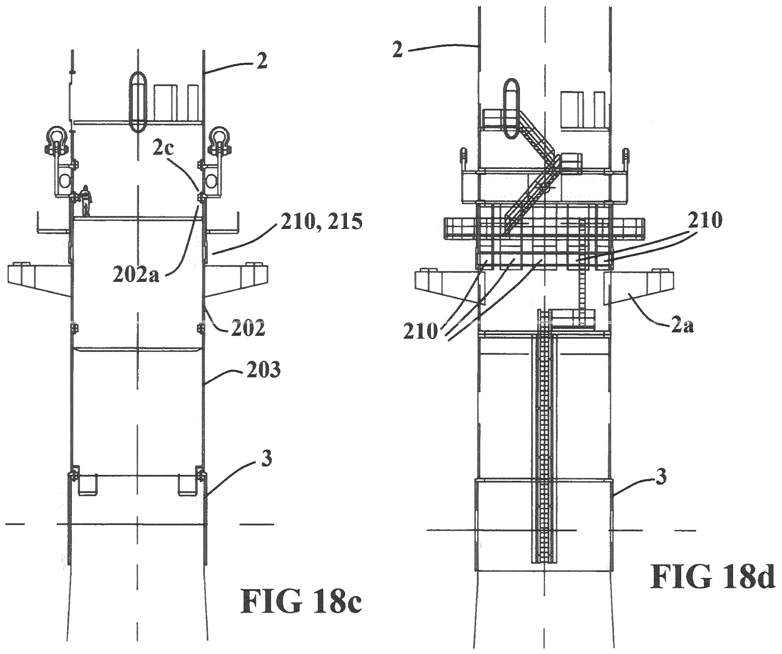

With reference to the figures 17a, b and 18a - d now embodiments of the connection between the lower end of the wind turbine mast 2 and the foundation 3, here the stabilizing column 3a of the floating foundation 3 will be discussed.

The figures 17a,b and 18a - d show that a bracket section 202 with the two diametrically outwardly protruding brackets 2a has been fitted onto the foundation 3 ahead of the mounting of the mast 2 plus nacelle 4 with hub 5 thereon. As discussed, the brackets 2a have sufficient strength to rest thereon the blade installation device 20 and absorb all loads during operation of the device 20, in particular when installing or de-installing a blade 10.

Here, a transition section 203 is placed between the foundation 3 and the bracket section 202.

It is shown that the bracket section 202, which has a tubular core from which the brackets 2a protrude, has a lower flange that is connected via bolts, here to an upper flange of the transition section 203.

At its upper end the bracket section 202 has an upper flange 202a that is to be connected via bolts to a lower flange 2c of the wind turbine mast 2, here flange 2c of a lifting bracket 205 pre-fitted to the lower end of the mast 2.

As discussed herein, it is envisaged that the assembly of wind turbine mast 2 plus nacelle 4 with hub 5 yet without the blades 10 is handled as one entity, e.g. by a crane vessel, when being installed on the foundation 3, e.g. the floating foundation 3. For example, this is done as discussed in WO2022/084344 or by a general purpose heavy lift crane vessel.

In view of the mating of the lower end of the mast 2 of this entity with the bracket section 202, it is preferred that, in addition to the flange connection which is well-known in the art, there is provision of one or more preliminary fastener devices that establish, e.g. automatically or on command, a preliminary fastening between the mast 2 and the bracket section 202. The flange connection with bolts or the like is then done at a later stage. As preferred, the one or more preliminary fastener devices are configured automatically create the fastening upon mating the lower end of the mast 2 with the bracket section 202.

The figures 17a,b and 18a-d illustrate a preferred embodiment of the preliminary fastener devices.

Basically, the preliminary fastening is achieved by a circular array of resilient hook members 210, here extending axially from the lower end of the mast 2 below the lower flange 2c thereof, that engage automatically behind a corresponding hook collar 215, here on the bracket section 202. The hook members 210 are here embodied as elongated hook fingers that extend axially downward from a fixed upper end to a free lower end thereof. The fingers 210 each have an inwardly directed hook portion at the free lower end. The hook fingers are configured to resiliently bent outwards as the hook portion at the lower end engages the collar 215 and to snap back with the hook portion behind the collar, when the lower edge of the collar is reached. Once this has occurred a preliminary fastening is obtained. The connection between the flanges 2c using bolts is done at a later stage.

The fingers 210 are made of steel.

As the mast 2 is lowered towards the bracket section 202, the resilient hook members 210 automatically snap behind the hook collar 215 and thus provide the desired preliminary fastening. Clearly, due to the enormous size and mass of the wind turbine, the dimensions of this automatic hook mechanism are significant as can be observed from the person visible in figure 18c with all details being to scale.

As shown, the hook members 210 have their upper end connected to a so-called lifting bracket 205 that has been pre-fitted at the lower end of the mast 2, for example (as shown) using a flange and bolts connection. This lifting bracket 205 has lifting lugs 206 to which lifting cables can be attached that are used in the process of lifting the wind turbine onto the foundation.

## Claims

1. Method for installing a blade (10) on a horizontal axis rotational hub of an offshore wind turbine, the offshore wind turbine (1) comprising a wind turbine mast (2) that is supported by a foundation, e.g. a floating foundation (3), of the offshore wind turbine and comprising a nacelle (4) with a horizontal axis rotational hub (5) provided on the top end of the wind turbine mast,
wherein use is made of a blade installation device (20) that is adapted to be temporarily installed on the offshore wind turbine (1) for the installation of one or more blades (10),
wherein the blade installation device (20) is transported, e.g. on a crane vessel (200), to the offshore wind turbine,
wherein a crane (220,240) of a vessel (200) is used for the temporary installation of the blade installation device (20) on the offshore wind turbine,
wherein the blade installation device comprises a mounting part (30) that is mounted on the foundation (3) of the offshore wind turbine and/or on a lower portion of the wind turbine mast (2,2a),
wherein the blade installation device comprises a crane mast (40) that is erected vertically in an operational position wherein the crane mast is supported by the mounting part (30) and extends parallel and adjacent to the wind turbine mast (2), the crane mast having a track (60),
wherein the blade installation device comprises a support bracket (71,72) that is engaged with the wind turbine mast (2) and laterally supports the erected crane mast (40),
wherein the blade installation device further comprises a blade manipulator assembly (50) comprising:
- a trolley (51) engaging the track (60) of the crane mast (40) and being movable along the track in vertical direction,
- optionally, a trolley drive (52) for moving the trolley (51) along the track (60),
- a blade manipulator (53) comprising one or more blade root engagement members (54) that are configured to engage a root end (10a) of the blade, wherein the blade manipulator is supported by said trolley (51) to enable one or more degrees of freedom of the blade manipulator (53) relative to the trolley (51),
wherein the blade installation device further comprises a hoist system (80) with a crane boom (81) that is mounted to a top end of the crane mast (40), a winch (82), and a winch driven cable (83),
wherein the method comprises lifting a blade (10) to be installed to a blade installation position (bip) and attaching the blade (10) that has been lifted to the blade installation position to the horizontal axis rotational hub (5) of the offshore wind turbine,
wherein the method comprises:
- bringing the trolley (51) in a lower position thereof and engaging the blade root engagement members (54) on the root end (10a) of the blade, and
- attaching the cable (83) of the hoist system (80) to the blade (10) at a distance remote from the root end (10a), preferably at a centre of gravity (COG) of the blade,
and wherein the method comprises the lifting of the blade (10) to the blade installation position (bip) by operating the winch (82) of the hoist system (80) and simultaneously moving the trolley (51) along the track (60), e.g. by the trolley drive (52).

2. Method according to claim 1, wherein the crane boom (81) has a length such that the winch driven cable (83) engages on the horizontally oriented blade at the centre of gravity (COG) thereof, whilst the root end (10a) of the blade is engaged by the manipulator assembly, e.g. wherein the COG of the blade is more than 25 meters away from the root end, e.g. between 30 and 40 meters away from the root end.

3. Method according to claim 1 or 2, wherein the blade (10) is suspended from the hoist system by a spreader structure (90) that extends along the length of the blade, e.g. above the blade, from an inner end thereof that is at or near the root of the blade to an outer end that is beyond the centre of gravity of the blade, wherein, the cable of the hoist system, preferably, engages on the spreader structure in vertical alignment with the centre of gravity of the blade, wherein, preferably, the spreader structure holds the blade at two locations that are inwardly and outwardly remote from the actual COG of the blade and the blade is transferred from a vessel (200) to a lower receiving position thereof by means of a blade lifting tool (250) of a crane (220,240) of the vessel engaging on the blade directly at the COG thereof.

4. Method according to any one or more of claims 1 - 3, wherein the boom (81) is a pivotal boom having its inner end pivotal about a horizontal pivot axis with a corresponding pivoting actuator assembly, e.g. with hydraulic actuators, for example wherein the boom (81) is a single segment rigid boom having its inner end pivoted to a base (84) that is connected to the crane mast, e.g. a slewable base (84), and having its outer end provided with one or more departure sheaves (85) from which one or more winch driven cables (3) depend.

5. Method according to any one or more of claims 1 - 4, wherein the crane mast (40) is composed of crane mast segments (40a-f) that are stacked one-by-one onto one another, and wherein the blade installation device further comprises a crane mast lifting unit (45) operated to repeatedly perform lifting actions in the process of erecting the crane mast (40), wherein, preferably, the crane mast segments each have a length/height of at least 15 meters, e.g. of between 15 and 30 meters, e.g. of about 25 meters, and/or wherein, preferably, the crane mast segments are embodied as latticed segments having main chords at the corners, e.g. with a square horizontal cross-section, preferably the horizontal cross-section of the mast segments exceeds 4.00m x 4.00m,
for example wherein all crane mast segments (40a-f) are placed on the blade installation device (20) ahead of the device (20) together with the crane mast segments (40a-f) being transferred from a vessel, e.g. the crane vessel, to the offshore wind turbine (1), preferably the crane mast segments (40a-f) are arranged in vertical orientation and side by side on the blade installation device (20), e.g. in an array extending over an arc, preferably the blade installation device comprises a magazine in which the crane mast segments (40a-f) are stored, and which magazine is configured and operated to move the crane segments in succession from their respective storage position to the position where the crane mast segment is assembled with the crane mast.

6. Method according to claim 5, wherein the stacking of crane mast segments (40a-f) onto one another is done from below, wherein the lifting unit (45) remains stationary and connected to the mounting part (30) in a crane mast assembly phase, with the crane mast (40) being lengthened in upward direction from the lifting unit.

7. Method according to any one or more of claims 1 - 6, wherein the hoist system (80) comprises a hoisting unit comprising the crane boom (81) and the winch (82) mounted to a hoisting unit base (84), e.g. having a slew bearing, which hoisting unit is mounted on a first crane mast segment (40a) and is moved up along the wind turbine mast (2) in the process of assembly of the crane mast (40).

8. Blade installation device (20) for installing a blade (10) on a horizontal axis rotational hub of an offshore wind turbine (1), the offshore wind turbine (1) comprising a wind turbine mast (2) that is supported by a foundation, e.g. a floating foundation (3), of the offshore wind turbine and comprising a nacelle (4) with a horizontal axis rotational hub (5) provided on the top end of the wind turbine mast,
which blade installation device (20) is adapted to be temporarily installed on the offshore wind turbine (1) for the installation of one or more blades (10),
wherein the blade installation device (20) is configured to be transported, e.g. on a crane vessel (200), to the offshore wind turbine,
wherein the blade installation device comprises a mounting part (30) that is configured to be mounted on the foundation (3) of the offshore wind turbine and/or on a lower portion of the wind turbine mast (2,2a),
wherein the blade installation device comprises a crane mast (40) that is configured to be erected vertically in an operational position wherein the crane mast is supported by the mounting part (30) and extends parallel and adjacent to the wind turbine mast (2), the crane mast (40) having a track (60),
wherein the blade installation device (20) comprises a support bracket (71,72) that is configured to be engaged with the wind turbine mast (2) and laterally supports the erected crane mast (40),
wherein the blade installation device further comprises a blade manipulator assembly (50) comprising:
- a trolley (51) engaging the track (60) of the crane mast (40) and being movable along the track in vertical direction,
- optionally, a trolley drive (52) for moving the trolley (51) along the track (60),
- a blade manipulator (53) comprising one or more blade root engagement members (54) that are configured to engage a root end (10a) of the blade (10), wherein the blade manipulator (53) is supported by said trolley (51) to enable one or more degrees of freedom of the blade manipulator (53) relative to the trolley (51),
wherein the blade installation device further comprises a hoist system (80) with a crane boom (81) that is mounted to a top end of the crane mast (40), a winch (82), and a winch driven cable (83),
and wherein the blade installation device (20) is configured for lifting of the blade to a blade installation position by operating the winch (82) of the hoist system (80) and simultaneously moving the trolley (51) along the track, e.g. by the trolley drive (52).

9. Device according to claim 8, wherein the crane boom (81) has a length such that the winch driven cable (83) can engage on the horizontally oriented blade at the centre of gravity (COG) thereof, whilst the root end (10a) of the blade is engaged by the manipulator assembly, e.g. wherein the COG of the blade is more than 25 meters away from the root end, e.g. between 30 and 40 meters away from the root end.

10. Device according to claim 8 or 9, wherein the device comprises a spreader structure (90) configured to extend along the length of the blade, e.g. above the blade, from an inner end thereof that is at or near the root of the blade to an outer end that is beyond the centre of gravity of the blade, wherein, preferably, the spreader structure is configured to hold the blade at two locations that are inwardly and outwardly remote from the actual COG of the blade and the blade is transferable from a vessel (200) to a lower receiving position thereof by means of a blade lifting tool (250) of a crane (220,240) of the vessel engaging on the blade directly at the COG thereof.

11. Device according to any one or more of claims 8 - 10, wherein the boom (81) is a pivotal boom having its inner end pivotal about a horizontal pivot axis with a corresponding pivoting actuator assembly, e.g. with hydraulic actuators, for example wherein the boom (81) is a single segment rigid boom having its inner end pivoted to a base (84) that is connected to the crane mast, e.g. a slewable base (84), and having its outer end provided with one or more departure sheaves (85) from which one or more winch driven cables (3) depend.

12. Device according to any one or more of claims 8 - 11, wherein the crane mast (40) is configured to be composed of crane mast segments (40a-f) that are stackable one-by-one onto one another, and wherein the blade installation device further comprises a crane mast lifting unit (45) configured to be operated to repeatedly perform lifting actions in the process of erecting the crane mast (40), wherein, preferably, the crane mast segments (40a-f) are embodied as latticed segments having main chords at the corners, e.g. with a square horizontal cross-section preferably said horizontal cross-section of the mast segments exceeds 4.00m x 4.00m, preferably the crane mast segments each have a length/height of at least 15 meters, e.g. of between 15 and 30 meters, e.g. of about 25 meters.

13. Device according to claim 12, wherein all crane mast segments (40a-f) are placed on the blade installation device (20) ahead of the device (20) together with the crane mast segments (40a-f) being transferred from a vessel, e.g. the crane vessel, to the offshore wind turbine (1), preferably the crane mast segments (40a-f) are arranged in vertical orientation and side by side on the blade installation device (20), e.g. in an array extending over an arc, preferably the blade installation device comprises a magazine in which the crane mast segments (40a-f) are stored, and which magazine is configured to move the crane segments in succession from their respective storage position to the position where the crane mast segment is assembled with the crane mast.

14. Device according to claim 12 or 13, wherein the crane mast is configured so that stacking of crane mast segments (40a-f) onto one another is done from below, wherein the lifting unit (45) is configured to remain stationary and connected to the mounting part (30) in a crane mast assembly phase, with the crane mast (40) being lengthened in upward direction from the lifting unit.

15. Device according to any one or more of claims 8 - 14, wherein the hoist system (80) comprises a hoisting unit comprising the crane boom (81) and the winch (82) mounted to a hoisting unit base (84), e.g. having a slew bearing, which hoisting unit is mounted on a first crane mast segment (40a) and is moved up along the wind turbine mast (2) in the process of assembly of the crane mast (40).

## Patentansprüche

1. Verfahren zum Einbau eines Rotorblatts (10) an einer Rotationsnabe mit horizontaler Achse einer Offshore-Windkraftanlage, wobei die Offshore-Windkraftanlage (1) einen Windkraftanlagenmast (2) umfasst, der von einem Fundament, z. B. einem schwimmenden Fundament (3), der Offshore-Windkraftanlage getragen wird und eine Gondel (4) mit einer Rotationsnabe (5) mit horizontaler Achse umfasst, die am oberen Ende des Windkraftanlagenmasts vorgesehen ist,
wobei eine Rotorblatteinbauvorrichtung (20) verwendet wird, die dazu eingerichtet ist, für den Einbau eines Rotorblatts oder mehrerer Rotorblätter (10) vorübergehend an der Offshore-Windkraftanlage (1) eingebaut zu werden,
wobei die Rotorblatteinbauvorrichtung (20), z. B. auf einem Kranschiff (200), zur Offshore-Windkraftanlage transportiert wird,
wobei ein Kran (220, 240) eines Schiffs (200) für den vorübergehenden Einbau der Rotorblatteinbauvorrichtung (20) an der Offshore-Windkraftanlage verwendet wird,
wobei die Rotorblatteinbauvorrichtung ein Montageteil (30) umfasst, das auf dem Fundament (3) der Offshore-Windkraftanlage und/oder an einem unteren Abschnitt des Windkraftanlagenmasts (2, 2a) montiert wird,
wobei die Rotorblatteinbauvorrichtung einen Kranmast (40) umfasst, der vertikal in einer Betriebsposition aufgerichtet wird, wobei der Kranmast vom Montageteil (30) getragen wird und sich parallel und angrenzend an den Windkraftanlagenmast (2) erstreckt, wobei der Kranmast eine Schiene (60) aufweist,
wobei die Rotorblatteinbauvorrichtung einen Befestigungsbügel (71, 72) umfasst, der mit dem Windkraftanlagenmast (2) in Angriff ist und den aufgerichteten Kranmast (40) seitlich stützt,
wobei die Rotorblatteinbauvorrichtung ferner eine Rotorblattmanipulatorbaugruppe (50) umfasst, die Folgendes umfasst:
- eine Laufkatze (51), die an die Schiene (60) des Kranmasts (40) angreift und in vertikaler Richtung entlang der Schiene beweglich ist,
- optional einen Laufkatzenantrieb (52) zum Bewegen der Laufkatze (51) entlang der Schiene (60),
- einen Rotorblattmanipulator (53), der ein oder mehrere Rotorblattwurzelangriffselemente (54) umfasst, die dazu ausgelegt sind, an ein Wurzelende (10a) des Rotorblatts anzugreifen, wobei der Rotorblattmanipulator von der Laufkatze (51) getragen wird, um einen oder mehrere Freiheitsgrade des Rotorblattmanipulators (53) relativ zur Laufkatze (51) zu ermöglichen,
wobei die Rotorblatteinbauvorrichtung ferner ein Hubsystem (80) mit einem Kranausleger (81), der an einem oberen Ende des Kranmasts (40) montiert wird, einer Seilwinde (82) und einem Seilwindenseil (83) umfasst,
wobei das Verfahren das Anheben eines Rotorblatts (10), das in einer Rotorblatteinbauposition (bip) zu montieren ist, und das Befestigen des Rotorblatts (10), das in die Rotorblatteinbauposition angehoben wurde, an der Rotationsnabe (5) mit horizontaler Achse der Offshore-Windkraftanlage umfasst, wobei das Verfahren Folgendes umfasst:
- Bringen der Laufkatze (51) in eine niedrigere Position und Angreifen der Rotorblattwurzelangriffselemente (54) am Wurzelende (10a) des Rotorblatts und
- Befestigen des Seils (83) des Hubsystems (80) in einem Abstand vom Wurzelende (10a) entfernt am Rotorblatt (10), vorzugsweise am Schwerpunkt (COG) des Rotorblatts,
und wobei das Verfahren das Anheben des Rotorblatts (10) in die Rotorblatteinbauposition (bip) durch Betätigen der Seilwinde (82) des Hubsystems (80) und gleichzeitiges Bewegen der Laufkatze (51) entlang der Schiene (60), z. B. durch den Laufkatzenantrieb (52), umfasst.

2. Verfahren nach Anspruch 1, wobei der Kranausleger (81) eine Länge aufweist, die so beschaffen ist, dass das Seilwindenseil (83) an dessen Schwerpunkt (COG) an das horizontal ausgerichtete Rotorblatt angreift, während das Wurzelende (10a) des Rotorblatts von der Manipulatorbaugruppe angegriffen wird, z. B. wobei der Schwerpunkt des Rotorblatts mehr als 25 Meter vom Wurzelende entfernt ist, z. B. zwischen 30 und 40 Meter vom Wurzelende entfernt ist.

3. Verfahren nach Anspruch 1 oder 2, wobei das Rotorblatt (10) durch eine Spreizstruktur (90) vom Hubsystem aufgehängt wird, die sich entlang der Länge des Rotorblatts erstreckt, z. B. über dem Rotorblatt, von dessen inneren Ende, das sich an oder nahe der Wurzel des Rotorblatts befindet, zu einem äußeren Ende, das über den Schwerpunkt des Rotorblatts hinaus liegt, wobei das Seil des Hubsystems vorzugsweise in die Spreizstruktur in vertikaler Ausrichtung mit dem Schwerpunkt des Rotorblatts eingreift, wobei die Spreizstruktur vorzugsweise das Rotorblatt an zwei Stellen hält, die nach innen und außen vom tatsächlichen Schwerpunkt des Rotorblatts entfernt sind, und das Rotorblatt von einem Schiff (200) in eine niedrigere Aufnahmeposition desselben mittels eines Rotorblatthebewerkzeugs (250) eines Krans (220, 240) des Schiffs, das direkt am Schwerpunkt des Rotorblatts angreift, verlagert wird.

4. Verfahren nach einem oder mehreren der Ansprüche 1-3, wobei der Ausleger (81) ein Schwenkausleger ist, dessen inneres Ende um eine horizontale Schwenkachse schwenkbar ist, mit einer entsprechenden schwenkbaren Stellgliedbaugruppe, z. B. mit hydraulischen Stellgliedern, zum Beispiel wobei der Ausleger (81) ein starrer Einsegmentausleger ist, dessen inneres Ende an einer Basis (84) schwenkbar montiert ist, die mit dem Kranmast verbunden ist, z. B. eine schwenkbare Basis (84), und dessen äußeres Ende mit einer oder mehreren Abtriebsscheiben (85) versehen ist, von denen ein oder mehrere Seilwindenseile (3) abhängen.

5. Verfahren nach einem oder mehreren der Ansprüche 1-4, wobei der Kranmast (40) aus Kranmastsegmenten (40a-f) besteht, die nacheinander aufeinander gestapelt werden, und wobei die Rotorblatteinbauvorrichtung ferner eine Kranmasthebeeinheit (45) umfasst, die zur wiederholten Durchführung von Hebeaktionen beim Aufrichten des Kranmasts (40) eingesetzt wird, wobei vorzugsweise die Kranmastsegmente jeweils eine Länge/Höhe von mindestens 15 Meter aufweisen, z. B. zwischen 15 und 30 Meter, z. B. von etwa 25 Meter, und/oder wobei die Kranmastsegmente vorzugsweise als Gittersegmente mit Hauptgurtelemente an den Ecken ausgeführt sind, z. B. mit einem quadratischen horizontalen Querschnitt, wobei vorzugsweise der horizontale Querschnitt der Mastsegmente größer als 4,00 m x 4,00 m ist,
zum Beispiel wobei alle Kranmastsegmente (40a-f) auf der Rotorblatteinbauvorrichtung (20) platziert werden, bevor die Vorrichtung (20) zusammen mit den Kranmastsegmenten (40a-f) von einem Schiff, z. B. dem Kranschiff, zur Offshore-Windkraftanlage (1) verlagert wird, wobei vorzugsweise die Kranmastsegmente (40a-f) in vertikaler Ausrichtung und nebeneinander auf der Rotoreinbauvorrichtung (20) angeordnet sind, z. B. in einer sich über einen Bogen erstreckenden Anordnung, wobei vorzugsweise die Rotorblatteinbauvorrichtung ein Magazin umfasst, in dem die Kranmastsegmente (40a-f) gelagert sind, und wobei das Magazin dazu ausgelegt ist und betrieben wird, die Kransegmente nacheinander von ihrer jeweiligen Lagerposition in die Position zu bewegen, in der das Kranmastsegment mit dem Kranmast montiert wird.

6. Verfahren nach Anspruch 5, wobei das aufeinander Stapeln der Kranmastsegmente (40a-f) von unten erfolgt, wobei die Hebeeinheit (45) in einer Kranmastmontagephase stationär und mit dem Montageteil (30) verbunden bleibt, wobei der Kranmast (40) von der Hebeeinheit nach oben verlängert wird.

7. Verfahren nach einem oder mehreren der Ansprüche 1-6, wobei das Hubsystem (80) eine Hubeinheit umfasst, die den Kranausleger (81) und die Seilwinde (82) umfasst, die an einer Hubeinheitsbasis (84) montiert sind, z. B. mit einem Schwenklager, wobei die Hubeinheit bei der Montage des Kranmasts (2) an einem ersten Kranmastsegment (40a) montiert und entlang des Windkraftanlagenmasts (40) nach oben bewegt wird.

8. Rotorblatteinbauvorrichtung (20) zum Einbau eines Rotorblatts (10) an einer Rotationsnabe mit horizontaler Achse einer Offshore-Windkraftanlage (1), wobei die Offshore-Windkraftanlage (1) einen Windkraftanlagenmast (2) umfasst, der von einem Fundament, z. B. einem schwimmenden Fundament (3), der Offshore-Windkraftanlage getragen wird und eine Gondel (4) mit einer Rotationsnabe (5) mit horizontaler Achse umfasst, die am oberen Ende des Windkraftanlagenmasts vorgesehen ist,
wobei die Rotorblatteinbauvorrichtung (20) dazu eingerichtet ist, für den Einbau eines Rotorblatts oder mehrerer Rotorblätter (10) vorübergehend an der Offshore-Windkraftanlage (1) eingebaut zu werden,
wobei die Rotorblatteinbauvorrichtung (20) dazu ausgelegt ist, z. B. auf einem Kranschiff (200), zur Offshore-Windkraftanlage transportiert zu werden,
wobei die Rotorblatteinbauvorrichtung ein Montageteil (30) umfasst, das dazu ausgelegt ist, auf dem Fundament (3) der Offshore-Windkraftanlage und/oder an einem unteren Abschnitt des Windkraftanlagenmasts (2, 2a) montiert zu werden, wobei die Rotorblatteinbauvorrichtung einen Kranmast (40) umfasst, der dazu ausgelegt ist, vertikal in einer Betriebsposition aufgerichtet zu werden, wobei der Kranmast vom Montageteil (30) getragen wird und sich parallel und angrenzend an den Windkraftanlagenmast (2) erstreckt, wobei der Kranmast (40) eine Schiene (60) aufweist,
wobei die Blatteinbauvorrichtung (20) einen Befestigungsbügel (71, 72) umfasst, der dazu ausgelegt ist, mit dem Windkraftanlagenmast (2) in Angriff zu sein, und den aufgerichteten Kranmast (40) seitlich stützt,
wobei die Rotorblatteinbauvorrichtung ferner eine Rotorblattmanipulatorbaugruppe (50) umfasst, die Folgendes umfasst:
- eine Laufkatze (51), die an die Schiene (60) des Kranmasts (40) angreift und in vertikaler Richtung entlang der Schiene beweglich ist,
- optional einen Laufkatzenantrieb (52) zum Bewegen der Laufkatze (51) entlang der Schiene (60),
- einen Rotorblattmanipulator (53), der ein oder mehrere Rotorblattwurzelangriffselemente (54) umfasst, die dazu ausgelegt sind, an ein Wurzelende (10a) des Rotorblatts (10) anzugreifen, wobei der Rotorblattmanipulator (53) von der Laufkatze (51) getragen wird, um einen oder mehrere Freiheitsgrade des Rotorblattmanipulators (53) relativ zur Laufkatze (51) zu ermöglichen,
wobei die Rotorblatteinbauvorrichtung ferner ein Hubsystem (80) mit einem Kranausleger (81), der an einem oberen Ende des Kranmasts (40) montiert ist, einer Seilwinde (82) und einem Seilwindenseil (83) umfasst und wobei die Rotorblatteinbauvorrichtung (20) dazu ausgelegt ist, das Rotorblatt durch Betätigen der Seilwinde (82) des Hubsystems (80) und gleichzeitiges Bewegen der Laufkatze (51) entlang der Schiene, z. B. durch den Laufkatzenantrieb (52), in eine Rotorblatteinbauposition anzuheben.

9. Vorrichtung nach Anspruch 8, wobei der Kranausleger (81) eine Länge aufweist, die so beschaffen ist, dass das Seilwindenseil (83) an dessen Schwerpunkt (COG) an das horizontal ausgerichtete Rotorblatt angreifen kann, während das Wurzelende (10a) des Rotorblatts von der Manipulatorbaugruppe eingegriffen wird, z. B. wobei der Schwerpunkt des Rotorblatts mehr als 25 Meter vom Wurzelende entfernt ist, z. B. zwischen 30 und 40 Meter vom Wurzelende entfernt ist.

10. Vorrichtung nach Anspruch 8 oder 9, wobei die Vorrichtung eine Spreizstruktur (90) umfasst, die dazu ausgelegt ist, sich entlang der Länge des Rotorblatts, z. B. über dem Rotorblatt, von dessen inneren Ende, das sich an oder in der Nähe der Rotorblattwurzel befindet, bis zu einem äußeren Ende, das über den Schwerpunkt des Rotorblatts hinaus liegt, zu erstrecken, wobei vorzugsweise die Spreizstruktur dazu ausgelegt ist, das Rotorblatt an zwei Stellen zu halten, die nach innen und außen vom tatsächlichen Schwerpunkt des Rotorblatts entfernt sind, und das Rotorblatt von einem Schiff (200) in eine niedrigere Aufnahmeposition desselben mittels eines Rotorblatthebewerkzeugs (250) eines Krans (220, 240) des Schiffs, das direkt am Schwerpunkt des Rotorblatts eingreift, verlagerbar ist.

11. Vorrichtung nach einem oder mehreren der Ansprüche 8-10, wobei der Ausleger (81) ein Schwenkausleger ist, dessen inneres Ende um eine horizontale Schwenkachse schwenkbar ist, mit einer entsprechenden schwenkbaren Stellgliedbaugruppe, z. B. mit hydraulischen Stellgliedern, zum Beispiel wobei der Ausleger (81) ein starrer Einsegmentausleger ist, dessen inneres Ende an einer Basis (84) schwenkbar montiert ist, die mit dem Kranmast verbunden ist, z. B. eine schwenkbare Basis (84), und dessen äußeres Ende mit einer oder mehreren Abtriebsscheiben (85) versehen ist, von denen ein oder mehrere Seilwindenseile (3) abhängen.

12. Vorrichtung nach einem oder mehreren der Ansprüche 8-11, wobei der Kranmast (40) dazu ausgelegt ist, aus Kranmastsegmenten (40a-f) zusammengesetzt zu sein, die nacheinander stapelbar sind, und wobei die Rotorblatteinbauvorrichtung ferner eine Kranmasthebeeinheit (45) umfasst, die dazu ausgelegt ist, beim Aufrichten des Kranmasts (40) wiederholt Hebeaktionen auszuführen, wobei die Kranmastsegmente (40a-f) vorzugsweise als Gittersegmente mit Hauptgurtelemente an den Ecken ausgeführt sind, z. B. mit einem quadratischen horizontalen Querschnitt, wobei vorzugsweise der horizontale Querschnitt der Mastsegmente größer als 4,00 m x 4,00 m ist, wobei vorzugsweise die Kranmastsegmente jeweils eine Länge/Höhe von mindestens 15 Meter aufweisen, z. B. zwischen 15 und 30 Meter, z. B. von etwa 25 Meter.

13. Vorrichtung nach Anspruch 12, wobei alle Kranmastsegmente (40a-f) auf der Rotorblatteinbauvorrichtung (20) platziert werden, bevor die Vorrichtung (20) zusammen mit den Kranmastsegmenten (40a-f) von einem Schiff, z. B. dem Kranschiff, zur Offshore-Windkraftanlage (1) verlagert wird, wobei vorzugsweise die Kranmastsegmente (40a-f) in vertikaler Ausrichtung und nebeneinander auf der Rotoreinbauvorrichtung (20) angeordnet sind, z. B. in einer sich über einen Bogen erstreckenden Anordnung, wobei vorzugsweise die Rotorblatteinbauvorrichtung ein Magazin umfasst, in dem die Kranmastsegmente (40a-f) gelagert sind, und wobei das Magazin dazu ausgelegt ist, die Kransegmente nacheinander von ihrer jeweiligen Lagerposition in die Position zu bewegen, in der das Kranmastsegment mit dem Kranmast montiert wird.

14. Vorrichtung nach Anspruch 12 oder 13, wobei der Kranmast derart ausgelegt ist, dass das aufeinander Stapeln der Kranmastsegmente (40a-f) von unten erfolgt, wobei die Hebeeinheit (45) dazu ausgelegt ist, in einer Kranmastmontagephase stationär und mit dem Montageteil (30) verbunden zu bleiben, wobei der Kranmast (40) von der Hebeeinheit nach oben verlängert wird.

15. Vorrichtung nach einem oder mehreren der Ansprüche 8-14, wobei das Hubsystem (80) eine Hubeinheit umfasst, die den Kranausleger (81) und die Seilwinde (82) umfasst, die an einer Hubeinheitsbasis (84) montiert sind, z. B. mit einem Schwenklager, wobei die Hubeinheit bei der Montage des Kranmasts (2) an einem ersten Kranmastsegment (40a) montiert und entlang des Windkraftanlagenmasts (40) nach oben bewegt wird.

## Revendications

1. Procédé d'installation d'une pale (10) sur un moyeu rotatif à axe horizontal d'une éolienne en mer, l'éolienne en mer (1) comprenant un mât d'éolienne en mer (2) qui est supporté par une fondation, par exemple une fondation flottante (3) de l'éolienne en mer, et comprenant une nacelle (4) dotée d'un moyeu rotatif à axe horizontal (5) disposé sur l'extrémité supérieure du mât d'éolienne,
un dispositif d'installation de pale (20) qui est conçu pour être installé temporairement sur l'éolienne en mer (1) étant utilisé pour l'installation d'une ou de plusieurs pales (10),
le dispositif d'installation de pale (20) étant transporté, par exemple sur un navire-grue (200), jusqu'à l'éolienne en mer,
une grue (220, 240) d'un navire (200) étant utilisée pour l'installation temporaire du dispositif d'installation de pale (20) sur l'éolienne en mer,
le dispositif d'installation de pale comprenant une partie de montage (30) qui est montée sur la fondation (3) de l'éolienne en mer et/ou sur une partie inférieure du mât d'éolienne (2, 2a),
le dispositif d'installation de pale comprenant un mât de grue (40) qui est érigé verticalement dans une position opérationnelle dans laquelle le mât de grue est supporté par la partie de montage (30) et s'étend parallèlement et de manière adjacente au mât d'éolienne (2), le mât de grue comportant un rail (60),
le dispositif d'installation de pale comprenant un support (71, 72) qui est en prise avec le mât d'éolienne (2) et supporte latéralement le mât de grue (40) érigé,
le dispositif d'installation de pale comprenant en outre un ensemble manipulateur de pale (50) comprenant :
- un chariot (51) venant en prise avec le rail (60) du mât de grue (40) et mobile le long du rail dans le sens vertical,
- éventuellement, un entraînement de chariot (52) pour déplacer le chariot (51) le long du rail (60),
- un manipulateur de pale (53) comprenant un ou plusieurs éléments de mise en prise de pied de pale (54) qui sont conçus pour venir en prise avec une extrémité de pied (10a) de la pale, le manipulateur de pale étant supporté par ledit chariot (51) pour permettre un ou plusieurs degrés de liberté du manipulateur de pale (53) par rapport au chariot (51),
le dispositif d'installation de pale comprenant en outre un système de levage (80) doté d'une flèche de grue (81) qui est montée sur une extrémité supérieure du mât de grue (40), un treuil (82) et un câble entraîné par treuil (83),
le procédé comprenant le levage d'une pale (10) à installer dans une position d'installation de pale (bip) et la fixation de la pale (10) qui a été levée dans la position d'installation de pale au moyeu rotatif à axe horizontal (5) de l'éolienne en mer,
le procédé comprenant :
- le déplacement du chariot (51) dans une position inférieure de celui-ci et la mise en prise des éléments de mise en prise de pied de pale (54) sur l'extrémité de pied (10a) de la pale, et
- la fixation du câble (83) du système de levage (80) à la pale (10) à une distance éloignée de l'extrémité de pied (10a), de préférence au centre de gravité (COG) de la pale,
et le procédé comprenant le levage de la pale (10) jusqu'à la position d'installation de pale (bip) en actionnant le treuil (82) du système de levage (80) et en déplaçant simultanément le chariot (51) le long du rail (60), par exemple par l'entraînement de chariot (52).

2. Procédé selon la revendication 1, la flèche de grue (81) présentant une longueur telle que le câble entraîné par treuil (83) vient en prise sur la pale orientée horizontalement au niveau du centre de gravité (COG) de celle-ci, tandis que l'extrémité de pied (10a) de la pale vient en prise avec l'ensemble manipulateur, par exemple la COG de la pale est éloignée de l'extrémité de pied de plus de 25 mètres, par exemple entre 30 et 40 mètres de l'extrémité de pied.

3. Procédé selon la revendication 1 ou 2, la pale (10) étant suspendue au système de levage par une structure d'écartement (90) qui s'étend le long de la longueur de la pale, par exemple au-dessus de la pale, d'une extrémité intérieure de celle-ci qui est au niveau ou près du pied de la pale jusqu'à une extrémité extérieure qui est au-delà du centre de gravité de la pale, de préférence le câble du système de levage venant en prise sur la structure d'écartement en alignement vertical avec le centre de gravité de la pale, de préférence la structure d'écartement maintenant la pale au niveau de deux emplacements qui sont éloignés vers l'intérieur et vers l'extérieur du COG réel de la pale et la pale étant transférée d'un navire (200) à une position de réception inférieure de celui-ci au moyen d'un outil de levage de pale (250) d'une grue (220, 240) du navire venant en prise directement sur la pale au niveau du COG de celle-ci.

4. Procédé selon l'une quelconque ou plusieurs des revendications 1 à 3, la flèche (81) étant une flèche pivotante dont l'extrémité intérieure pivote autour d'un axe de pivotement horizontal avec un ensemble actionneur pivotant correspondant, par exemple avec des actionneurs hydrauliques, par exemple la flèche (81) étant une flèche rigide à segment unique dont l'extrémité intérieure pivote sur une base (84) qui est reliée au mât de grue, par exemple une base pivotante (84), et dont l'extrémité extérieure est pourvue d'une ou de plusieurs poulies de départ (85) de laquelle ou desquelles s'étendent un ou plusieurs câbles entraînés par treuil (3).

5. Procédé selon une ou plusieurs des revendications 1 à 4, le mât de grue (40) étant composé de segments de mât de grue (40a-f) qui sont empilés les uns sur les autres, et le dispositif d'installation de pale comprenant en outre une unité de levage de mât de grue (45) actionnée pour effectuer des actions de levage répétées lors du processus de montage du mât de grue (40), de préférence les segments de mât de grue ayant chacun une longueur/hauteur d'au moins 15 mètres, par exemple entre 15 et 30 mètres, par exemple d'environ 25 mètres, et/ou, de préférence, les segments de mât de grue étant réalisés sous forme de segments en treillis présentant des membrures principales aux coins, par exemple avec une section transversale horizontale carrée, la section transversale horizontale des segments de mât étant de préférence supérieure à 4,00 m x 4,00 m,
par exemple, tous les segments de mât de grue (40a-f) étant placés sur le dispositif d'installation de pale (20) en amont du dispositif (20), les segments de mât de grue (40a-f) étant transférés d'un navire, par exemple le navire de grue, à l'éolienne en mer (1), de préférence les segments de mât de grue (40a-f) étant disposés verticalement et côte à côte sur le dispositif d'installation de pale (20), par exemple en un réseau s'étendant sur un arc, de préférence, le dispositif d'installation de pale comprend un magasin dans lequel les segments de mât de grue (40a-f) sont rangés, et lequel magasin est conçu et actionné pour déplacer les segments de grue successivement de leur position de rangement respective à la position dans laquelle le segment de mât de grue est assemblé avec le mât de grue.

6. Procédé selon la revendication 5, l'empilage des segments de mât de grue (40a-f) les uns sur les autres s'effectuant par le bas, l'unité de levage (45) restant fixe et reliée à la partie de montage (30) dans une phase de montage du mât de grue, le mât de grue (40) étant prolongé vers le haut à partir de l'unité de levage.

7. Procédé selon l'une quelconque ou plusieurs des revendications 1 à 6, le système de levage (80) comprenant une unité de levage comprenant la flèche de grue (81) et le treuil (82) monté sur une base d'unité de levage (84), par exemple ayant un palier de pivotement, laquelle unité de levage est montée sur un premier segment de mât de grue (40a) et est déplacée vers le haut le long du mât d'éolienne (2) dans le processus d'assemblage du mât de grue (40).

8. Dispositif d'installation de pale (20) destiné à installer une pale (10) sur un moyeu rotatif à axe horizontal d'une éolienne en mer (1), l'éolienne en mer (1) comprenant un mât d'éolienne en mer (2) qui est supporté par une fondation, par exemple une fondation flottante (3) de l'éolienne en mer, et comprenant une nacelle (4) dotée d'un moyeu rotatif à axe horizontal (5) disposé sur l'extrémité supérieure du mât d'éolienne,
lequel dispositif d'installation de pale (20) est conçu pour être installé temporairement sur l'éolienne en mer (1) est utilisé pour l'installation d'une ou de plusieurs pales (10),
le dispositif d'installation de pale (20) étant conçu pour être transporté, par exemple sur un navire-grue (200), jusqu'à l'éolienne en mer,
le dispositif d'installation de pale comprenant une partie de montage (30) qui est conçue pour être montée sur la fondation (3) de l'éolienne en mer et/ou sur une partie inférieure du mât d'éolienne (2, 2a),
le dispositif d'installation de pale comprenant un mât de grue (40) qui est conçu pour être érigé verticalement dans une position opérationnelle dans laquelle le mât de grue est supporté par la partie de montage (30) et s'étend parallèlement et de manière adjacente au mât d'éolienne (2), le mât de grue (40) comportant un rail (60),
le dispositif d'installation de pale (20) comprenant un support (71, 72) qui est conçu pour être en prise avec le mât d'éolienne (2) et supporte latéralement le mât de grue (40) érigé,
le dispositif d'installation de pale comprenant en outre un ensemble manipulateur de pale (50) comprenant :
- un chariot (51) venant en prise avec le rail (60) du mât de grue (40) et mobile le long du rail dans le sens vertical,
- éventuellement, un entraînement de chariot (52) pour déplacer le chariot (51) le long du rail (60),
- un manipulateur de pale (53) comprenant un ou plusieurs éléments de mise en prise de pied de pale (54) qui sont conçus pour venir en prise avec une extrémité de pied (10a) de la pale (10), le manipulateur de pale (53) étant supporté par ledit chariot (51) pour permettre un ou plusieurs degrés de liberté du manipulateur de pale (53) par rapport au chariot (51),
le dispositif d'installation de pale comprenant en outre un système de levage (80) doté d'une flèche de grue (81) qui est montée sur une extrémité supérieure du mât de grue (40), un treuil (82) et un câble entraîné par treuil (83),
le dispositif d'installation de pale (20) étant conçu pour lever la pale jusqu'à une position d'installation de pale en actionnant le treuil (82) du système de levage (80) et en déplaçant simultanément le chariot (51) le long du rail, par exemple par l'entraînement de chariot (52).

9. Dispositif selon la revendication 8, la flèche de grue (81) présentant une longueur telle que le câble entraîné par treuil (83) peut venir en prise sur la pale orientée horizontalement au centre de gravité (COG) de celle-ci, tandis que l'extrémité de pied (10a) de la pale vient en prise avec l'ensemble manipulateur, par exemple la COG de la pale est éloignée de l'extrémité de pied de plus de 25 mètres, par exemple entre 30 et 40 mètres de l'extrémité de pied.

10. Dispositif selon la revendication 8 ou 9, le dispositif comprenant une structure d'écartement (90) conçue pour s'étendre le long de la longueur de la pale, par exemple au-dessus de la pale, à partir d'une extrémité intérieure de celle-ci qui est au niveau ou près du pied de la pale jusqu'à une extrémité extérieure qui est au-delà du centre de gravité de la pale, de préférence la structure d'écartement étant conçue pour maintenir la pale au niveau de deux emplacements qui sont éloignés vers l'intérieur et vers l'extérieur du COG réel de la pale et la pale pouvant être transférée d'un navire (200) à une position de réception inférieure de celui-ci au moyen d'un outil de levage de pale (250) d'une grue (220, 240) du navire venant en contact avec la pale directement au niveau du COG de celle-ci.

11. Dispositif selon l'une quelconque ou plusieurs des revendications 8 à 10, la flèche (81) étant une flèche pivotante dont l'extrémité intérieure pivote autour d'un axe de pivotement horizontal avec un ensemble actionneur pivotant correspondant, par exemple avec des actionneurs hydrauliques, par exemple la flèche (81) étant une flèche rigide à segment unique dont l'extrémité intérieure pivote sur une base (84) qui est reliée au mât de grue, par exemple une base pivotante (84), et dont l'extrémité extérieure est pourvue d'une ou plusieurs poulies de départ (85) de laquelle ou desquelles s'étendent un ou plusieurs câbles entraînés par treuil (3).

12. Dispositif selon une ou plusieurs des revendications 8 à 11, le mât de grue (40) étant conçu pour être composé de segments de mât de grue (40a-f) qui peuvent être empilés les uns sur les autres, et le dispositif d'installation de pale comprenant en outre une unité de levage de mât de grue (45) conçue pour effectuer des actions de levage répétées lors du processus de montage du mât de grue (40), de préférence les segments de mât de grue (40a-f) se présentant sous la forme de segments en treillis présentant des membrures principales aux coins, par exemple avec une section transversale horizontale carrée, de préférence supérieure à 4,00 m x 4,00 m, les segments de mât de grue ayant de préférence chacun une longueur/hauteur d'au moins 15 mètres, par exemple comprise entre 15 et 30 mètres, par exemple d'environ 25 mètres.

13. Dispositif selon la revendication 12, tous les segments de mât de grue (40a-f) étant placés sur le dispositif d'installation de pale (20) en amont du dispositif (20), les segments de mât de grue (40a-f) étant transférés d'un navire, par exemple le navire de grue, à l'éolienne en mer (1), de préférence les segments de mât de grue (40a-f) étant disposés verticalement et côte à côte sur le dispositif d'installation de pale (20), par exemple en un réseau s'étendant sur un arc, de préférence le dispositif d'installation de pale comprenant un magasin dans lequel les segments de mât de grue (40a-f) sont rangés, et ledit magasin étant conçu pour déplacer les segments de grue successivement de leur position de rangement respective à la position dans laquelle le segment de mât de grue est assemblé avec le mât de grue.

14. Dispositif selon la revendication 12 ou 13, le mât de grue étant conçu de sorte que l'empilement de segments de mât de grue (40a-f) les uns sur les autres s'effectue par le bas, l'unité de levage (45) étant conçue de sorte à rester fixe et reliée à la partie de montage (30) dans une phase de montage de mât de grue, le mât de grue (40) étant prolongé vers le haut à partir de l'unité de levage.

15. Dispositif selon l'une quelconque ou plusieurs des revendications 8 à 14, le système de levage (80) comprenant une unité de levage comprenant la flèche de grue (81) et le treuil (82) monté sur une base d'unité de levage (84), par exemple ayant un palier de pivotement, laquelle unité de levage est montée sur un premier segment de mât de grue (40a) et est déplacée vers le haut le long du mât d'éolienne (2) dans le processus d'assemblage du mât de grue (40).
